(19) 

Europäisches
Patentamt
European
Patent Office
Office européen
des brevets

(11) **EP 4 239 963 A1**

(12) **EUROPEAN PATENT APPLICATION**
published in accordance with Art. 153(4) EPC

(43) Date of publication:
**06.09.2023 Bulletin 2023/36**

(21) Application number: **21896721.4**

(22) Date of filing: **01.11.2021**

(51) International Patent Classification (IPC):
**H04L 27/36** *(2006.01)*

(52) Cooperative Patent Classification (CPC):
**H04L 27/36; H04L 27/38**

(86) International application number:
**PCT/CN2021/127855**

(87) International publication number:
**WO 2022/111220 (02.06.2022 Gazette 2022/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.11.2020 CN 202011346394**

(71) Applicant: **Huawei Technologies Co., Ltd.
Shenzhen, Guangdong 518129 (CN)**

(72) Inventors:
• **ZHANG, Gongzheng
Shenzhen, Guangdong 518129 (CN)**

• **YU, Tianhang
Shenzhen, Guangdong 518129 (CN)**
• **XU, Chen
Shenzhen, Guangdong 518129 (CN)**
• **LI, Rong
Shenzhen, Guangdong 518129 (CN)**
• **WANG, Jun
Shenzhen, Guangdong 518129 (CN)**
• **TONG, Wen
Shenzhen, Guangdong 518129 (CN)**

(74) Representative: **Epping - Hermann - Fischer
Patentanwaltsgesellschaft mbH
Schloßschmidstraße 5
80639 München (DE)**

(54) **DATA TRANSMISSION METHOD AND APPARATUS, AND SYSTEM**

(57) Embodiments of this application disclose a data transmission method, apparatus, and system, to support high spectral efficiency through modulation and demodulation based on a zero time point. Embodiments of this application provide a data transmission method. The method includes: obtaining a data stream, where the data stream includes a plurality of bit groups; modulating the data stream into a modulated symbol stream according to a preset modulation rule, and generating a modulated signal based on the modulated symbol stream, where the modulated symbol stream includes a plurality of modulated symbols, and the modulation rule is: determining, in a symbol period of one modulated symbol based on a value of a first bit group, a zero time point corresponding to the first bit group, where the zero time point is a zero crossing point of the modulated signal in the symbol period, the first bit group includes at least one bit, and the first bit group is one of the plurality of bit groups; and sending the modulated signal.

FIG. 2

EP 4 239 963 A1

**Description**

This application claims priority to Chinese Patent Application No. 202011346394.8, filed with the China National Intellectual Property Administration on November 25, 2020, and entitled "DATA TRANSMISSION METHOD, APPARATUS, AND SYSTEM", which is incorporated herein by reference in its entirety.

**TECHNICAL FIELD**

This application relates to the field of communication technologies, and in particular, to a data transmission method, apparatus, and system.

**BACKGROUND**

Available bandwidths of millimeter wave and terahertz are typically greater than 1 gigahertz (GHz), which is a candidate frequency band for a 6th generation (6th generation, 6G). An amplitude-based modulation method is used in a conventional digital wireless communication system. The digital wireless communication system includes a transmitter and a receiver. An analog-to-digital converter (analog-to-digital converter, ADC), used as an interface for analog-to-digital signal conversion in the receiver, samples continuous signals to facilitate subsequent processing such as demodulation and decoding. A sampling rate is at least twice a signal bandwidth to desirably reconstruct the continuous signals. Quantization after sampling may cause irreversible information loss. Higher sampling precision indicates less distortion. Power consumption of the ADC increases exponentially with the sampling rate. When the sampling rate is excessively high, it is difficult to implement a high-rate and high-precision ADC. This poses a great challenge to a receiver that uses millimeter wave and terahertz.

A signal modulation design can lower a requirement on an ADC (for example, an ADC with a 1-bit quantization width), and is one of key technologies for implementing effective millimeter wave/terahertz transmission. In an existing modulation method, an amplitude needs to be used to carry information, and a 1-bit ADC may have amplitude information lost. Therefore, a data transmission system using the 1-bit ADC cannot effectively use the amplitude-based modulation method, and cannot support high spectral efficiency.

**SUMMARY**

Embodiments of this application provide a data transmission method, apparatus, and system, to support high spectral efficiency through modulation and demodulation based on a zero time point.

To resolve the foregoing technical problem, embodiments of this application provide the following technical solutions. According to a first aspect, an embodiment of this application provides a data transmission method. The method includes:

obtaining a data stream, where the data stream includes a plurality of bit groups;
modulating the data stream into a modulated symbol stream according to a preset modulation rule, and generating a modulated signal based on the modulated symbol stream, where the modulated symbol stream includes a plurality of modulated symbols, and the modulation rule is: determining, in a symbol period of one modulated symbol based on a value of a first bit group, a zero time point corresponding to the first bit group, where the zero time point is a zero crossing point of the modulated signal in the symbol period, the first bit group includes at least one bit, and the first bit group is one of the plurality of bit groups; and
sending the modulated signal.

In this embodiment of this application, a plurality of bit groups in the data stream may be modulated to corresponding zero time points according to the modulation rule. A finally generated modulated signal may carry the zero time points corresponding to the plurality of bit groups. In other words, in this embodiment of this application, modulation of the data stream is implemented based on the zero time points, without the need to carry amplitude information in the modulated signal. Therefore, modulation and demodulation based on the zero time points can support high spectral efficiency.

In some embodiments of this application, a quantity of bits included in each of the plurality of bit groups is in a one-to-one correspondence with a preset modulation order.

In this embodiment of this application, the quantity of bits included in each bit group is in a one-to-one correspondence with the preset modulation order. For example, if the modulation order is 4, the bit group in the data stream includes $\log_2(4) = 2$ bits. In this embodiment of this application, a transmit end may group bits of the data stream based on the modulation order, to obtain the plurality of bit groups in the data stream.

In some embodiments of this application, the modulating the data stream into a modulated symbol stream according to a preset modulation rule includes: determining, according to the modulation rule, a plurality of intervals included in the symbol period; and mapping the first bit group to a zero time point in one of the plurality of intervals.

In this embodiment of this application, a modulation process of the first bit group is used as an example for description of modulation of the data stream. For example, the transmit end determines, according to the modulation rule, a plurality of intervals included in one symbol period. A quantity of intervals in one modulation periodicity is not limited. When there is only one zero time point in each of the plurality of intervals in the symbol period, the first bit group is mapped to an interval in the plurality of intervals based on a value of the first bit group. For example, each symbol period is evenly divided into four intervals, which represent 2-bit information. The bit stream is grouped per two bits, and time modulation is performed on each bit group according to the following mapping rule: 00-->T/8, 01-->3T/8, 10-->5T/8, 11-->7T/8. Values of different bit groups may be modulated to zero time points in different intervals. Therefore, data information may be carried through time modulation. In this embodiment of this application, with more partitions, the zero time point in the symbol period can facilitate implementation of higher-order modulation and higher spectral efficiency.

In some embodiments of this application, a head of the symbol period includes a reserved first time interval, and/or a tail of the symbol period includes a reserved second time interval.

A value of the first time interval may be the same as or different from a value of the second time interval. A specific implementation depends on an application scenario. This is not limited herein. In this embodiment of this application, time positions of the modulated symbols are maximally evenly distributed in one symbol period, and some time intervals may be reserved at the head and tail of the symbol period, to ensure an interval between zero points of two adjacent symbols.

In some embodiments of this application, the modulated symbol stream includes a plurality of modulated symbol blocks. One modulated symbol block includes M modulated symbols, and M is a positive integer. A zero time point corresponding to the first modulated symbol in the one modulated symbol block is located at a starting position of the one modulated symbol block. A zero time point corresponding to the last modulated symbol in the one modulated symbol block is located at an ending position of the one modulated symbol block.

One modulated symbol block (referred to as a symbol block for short below) in the modulated symbol stream includes M modulated symbols. A value of M is not limited. In this embodiment of this application, a zero time point of a middle modulated symbol other than the first modulated symbol and the last modulated symbol in the modulated symbol block is determined based on a same bit group and the modulation rule. A zero time point corresponding to the first modulated symbol in one modulated symbol block is located at a starting position of the one modulated symbol block, and a zero time point corresponding to the last modulated symbol in the one modulated symbol block is located at an ending position of the one modulated symbol block. In a modulated symbol block generated in this manner, zero time points are defined at a starting position and an ending position of the symbol block. This ensures that each modulated symbol block starts with a zero value and ends with a zero value, and signals between the modulated symbol blocks are smoothly connected.

In some embodiments of this application, the modulated symbol stream includes a plurality of modulated symbol blocks, one modulated symbol block includes M modulated symbols, and M is a positive integer. A prefix of the one modulated symbol block includes a reserved first guard interval (guard interval, GI), and/or a suffix of the one modulated symbol block includes a reserved second guard interval.

A value of the first guard interval may be the same as or different from a value of the second guard interval. A specific implementation depends on an application scenario. This is not limited herein. In this embodiment of this application, the prefix of the modulated symbol block refers to a position of a starting symbol of the modulated symbol block, and the suffix of the modulated symbol block refers to a position of an ending symbol of the modulated symbol block. Because a filter or the like may cause distortion of the starting symbol and the ending symbol of the modulated symbol block, guard intervals may be respectively inserted into a starting position and an ending position of the modulated symbol block. The guard interval may be a specific symbol or a null guard interval. A smooth filter may further be introduced for a generated modulated symbol block to improve power of an out-of-band signal.

In some embodiments of this application, the generating a modulated signal based on the modulated symbol stream includes: generating the modulated signal based on zero time points corresponding to the plurality of modulated symbols in the modulated symbol stream.

After obtaining the modulated symbol stream, the transmit end determines the zero time points corresponding to the plurality of modulated symbols in the modulated symbol stream, and generates the modulated signal based on the zero time points. Therefore, the modulated signal generated in this embodiment of this application may be obtained through time modulation. The zero time point carries data information.

In some embodiments of this application, the generating the modulated signal based on zero time points corresponding to the plurality of modulated symbols in the modulated symbol stream includes: generating the modulated signal in the following manner:

$$s(iT_o) = \prod_{k=0}^{M-1} \sin\left(\frac{\pi}{MT}(iT_o - kT - \tau_k - \phi)\right),$$

where $s(iT_o)$ represents a piece of sampling data in the modulated signal, $iT_o$ represents a sampling time point, M represents a quantity of modulated symbols in a modulated symbol block in the modulated symbol stream, T represents a size of a symbol period of a modulated symbol, k represents an index of a $k^{th}$ modulated symbol in a modulated symbol block in the modulated symbol stream, $\tau_k$ represents a zero time point corresponding to a $k^{th}$ modulated symbol in a modulated symbol block in the modulated symbol stream, and $\phi$ represents an initial phase. In this embodiment of this application, the foregoing manner of generating $s(iT_o)$ is implemented based

on sampling, so as to generate a to-be-sent modulated signal based on the zero time points obtained through modulation. Without limitation, another manner may also be used to generate the modulated signal in this embodiment of this application. For details, refer to examples in subsequent embodiments.

According to a second aspect, an embodiment of this application further provides a data transmission method. The method includes:

obtaining a modulated signal; and
determining a modulated symbol stream based on the modulated signal, and determining a data stream based on the modulated symbol stream and a preset modulation rule. The modulated symbol stream includes a plurality of modulated symbols. The data stream includes a plurality of bit groups. The modulation rule is: determining a value of a first bit group based on a zero time point of a modulated signal in a symbol period of one modulated symbol. The zero time point is a zero crossing point, in the symbol period, of the modulated signal in the symbol period of the one modulated symbol. The first bit group includes at least one bit, and the first bit group is one of the plurality of bit groups.

In this embodiment of this application, the obtained modulated signal may carry zero time points corresponding to the plurality of bit groups. In other words, in this embodiment of this application, modulation of the data stream is implemented based on the zero time points, and the data stream can be restored without the need to carry amplitude information in the modulated signal. Therefore, modulation and demodulation based on the zero time points can support high spectral efficiency.

It should be noted that, a receive end should use a demodulation rule when performing a demodulation method. However, because the demodulation rule has a same principle with a modulation rule in the foregoing embodiment, in which a correspondence between a zero crossing point and a value of a bit group is used, the demodulation rule is still expressed as the modulation rule in this embodiment of this application without ambiguity.

After obtaining the modulated signal, the receive end determines the modulated symbol stream based on the modulated signal, where the modulated signal is a continuous signal. The modulated symbol stream may be obtained by sampling the modulated signal, and the modulated symbol stream includes a plurality of modulated symbols. The receive end may obtain the data stream by using the preset modulation rule and the modulated symbol stream. The modulation rule may be prestored in the receive end, or may be obtained by the receive end before demodulating the modulated signal. The modulation rule used in this embodiment of this application is different from existing amplitude modulation. To be specific, in this embodiment of this application, data information is directly modulated to time (or referred to as a time point), and the receive end performs demodulation by using time information. Therefore, data transmission can be performed without using the amplitude information.

For example, the receive end performs time detection on the received modulated signal to obtain zero time points in all symbol periods, performs demodulation based on the detected zero time points, and then performs channel decoding to restore a data stream from a transmit end. In this embodiment of this application, the data information is directly modulated to time (or referred to as a time point), and the receive end performs demodulation by using time information. Therefore, data transmission can be performed without using the amplitude information.

In some embodiments of this application, the determining a modulated symbol stream based on the modulated signal includes:

oversampling the modulated signal by using an ADC, to obtain pattern information in the symbol period; and
performing pattern decision on the pattern information in the symbol period to obtain a modulated symbol corresponding to the zero time point.

The receive end may process the modulated signal through the ADC. For example, the ADC may be the foregoing analog-to-digital converter ADC with a 1-bit quantization width. Another type of ADC may be used in this embodiment of this application. This is not limited herein. For example, the receive end may oversample the modulated signal by using the ADC, to obtain the pattern information in the symbol period, and then perform pattern decision on the pattern information in the symbol period to obtain the modulated symbol corresponding to the zero time point.

For example, because each symbol has only one zero point at a zero time point obtained through modulation, the data information may alternatively be reflected on a pattern existing after 1-bit quantization is performed on the signal. A receiver may perform oversampling by using a 1-bit ADC to obtain pattern information of the signal, and perform pattern decision on the pattern information for demodulation. A sampling rate of the 1-bit ADC is not less than a symbol rate multiplied by a modulation order, to distinguish between different zero positions. A higher oversampling rate indicates more distinguishable time information and better demodulation performance.

In some embodiments of this application, the determining a modulated symbol stream based on the modulated signal includes:

detecting an actual zero time point of the modulated signal;
determining a preset zero time point closest to the actual zero time point on a time axis; and
determining a modulated symbol corresponding to the preset zero time point closest to the actual zero time point on the time axis.

After the modulated signal passes through a channel, a position of a zero crossing point changes. The receive end detects an actual zero time point of the modulated signal, where the actual zero time point is a zero position detected from the modulated signal. Because the position of the zero crossing point may change, after detecting an actual zero time point of the modulated signal in each symbol period, the receive end needs to perform decision based on the actual zero time point, determine a preset zero time point closest to the actual zero time point on the time axis, and then determine the modulated symbol based on the preset zero time point. The foregoing process may alternatively be implemented by using a time-to-digital converter.

An example is used for description herein. The time-to-digital converter is a device for sampling and quantizing a time signal. Because the transmit end modulates the signal at a zero position (namely, a zero time point) of the signal, the use of the time-to-digital converter is a direct and effective manner of parsing the modulated signal. The time-to-digital converter may directly sample the zero position, namely, time information, of the signal; and perform soft/hard demodulation and subsequent channel decoding on received zero point information according to a modulation scheme. In some embodiments of this application, a quantity of bits included in each of the plurality of bit groups is in a one-to-one correspondence with a preset modulation order.

In this embodiment of this application, the quantity of bits included in each bit group is in a one-to-one correspondence with the preset modulation order. For example, if the modulation order is 4, the bit group in the data stream includes $\log_2(4) = 2$ bits. In this embodiment of this application, the transmit end may group bits of the data stream based on the modulation order, to obtain the plurality of bit groups in the data stream.

In some embodiments of this application, the determining a modulated symbol stream based on the modulated signal includes:

determining a plurality of intervals included in the symbol period; and
determining a modulated symbol corresponding to a zero time point in each of the plurality of intervals.

The receive end determines, according to the modulation rule, a plurality of intervals included in one symbol period.

A quantity of intervals in one modulation periodicity is not limited. When there is only one zero time point in each of the plurality of intervals in the symbol period, the modulated symbol is determined based on positions of zero time points in the intervals in the symbol period. For example, each symbol period is evenly divided into four intervals, which represent 2-bit information. The bit stream is grouped per two bits, and time demodulation is performed on each bit group according to the following mapping rule: T/8-->00, 3T/8-->01, 5T/8-->10, 7T/8-->11. The modulated symbol is determined based on positions of zero time points in the intervals in the symbol period. Therefore, data information may be carried through time modulation. In this embodiment of this application, with more partitions, the zero time point in the symbol period can facilitate implementation of higher-order modulation and higher spectral efficiency.

In some embodiments of this application, a head of the symbol period includes a reserved first time interval, and/or a tail of the symbol period includes a reserved second time interval.

A value of the first time interval may be the same as or different from a value of the second time interval. A specific implementation depends on an application scenario. This is not limited herein. In this embodiment of this application, time positions of the modulated symbols are maximally evenly distributed in one symbol period, and some time intervals may be reserved at the head and tail of the symbol period, to ensure an interval between zero points of two adjacent symbols.

In some embodiments of this application, the modulated symbol stream includes a plurality of modulated symbol blocks. One modulated symbol block includes M modulated symbols, and M is a positive integer. A zero time point corresponding to the first modulated symbol in the one modulated symbol block is located at a starting position of the one modulated symbol block. A zero time point corresponding to the last modulated symbol in the one modulated symbol block is located at an ending position of the one modulated symbol block.

One modulated symbol block (referred to as a symbol block for short below) in the modulated symbol stream includes M modulated symbols. A value of M is not limited. In this embodiment of this application, a zero time point of a middle modulated symbol other than the first modulated symbol and the last modulated symbol in the modulated symbol block is determined based on a same bit group and the modulation rule. A zero time point corresponding to the first modulated symbol in one modulated symbol block is located at a starting position of the one modulated symbol block, and a zero time point corresponding to the last modulated symbol in the one modulated symbol block is located at an ending position of the one modulated symbol block. In a modulated symbol block generated in this manner, zero time points are defined at a starting position and an ending position of the symbol block. This ensures that each modulated symbol block starts with a zero value and ends with a zero value, and signals between the modulated symbol blocks are smoothly connected.

In some embodiments of this application, the modulated symbol stream includes a plurality of modulated symbol blocks, one modulated symbol block includes M modulated symbols, and M is a positive integer. A prefix of the one modulated symbol block includes a reserved first guard interval, and/or a suffix of the one modulated symbol block includes a reserved second guard interval.

A value of the first guard interval may be the same as or different from a value of the second guard interval. A specific implementation depends on an application scenario. This is not limited herein. In this embodiment of this application, the prefix of the modulated symbol block refers to a position of a starting symbol of the modulated symbol block, and the suffix of the modulated symbol block refers to a position of an ending symbol of the modulated symbol block. Because a filter or the like may cause distortion of the starting symbol and the ending symbol of the modulated symbol block, guard intervals may be respectively inserted into a starting position and an ending position of the modulated symbol block. The guard interval may be a specific symbol or a null guard interval. A smooth filter may further be introduced for a generated modulated symbol block to improve power of an out-of-band signal.

According to a third aspect, an embodiment of this application further provides a first data transmission device, including:

> an obtaining module, configured to obtain a data stream, where the data stream includes a plurality of bit groups;
> a modulation module, configured to: modulate the data stream into a modulated symbol stream according to a preset modulation rule, and generate a modulated signal based on the modulated symbol stream, where the modulated symbol stream includes a plurality of modulated symbols, and the modulation rule is: determining, in a symbol period of one modulated symbol based on a value of a first bit group, a zero time point corresponding to the first bit group, where the zero time point is a zero crossing point of the modulated signal in the symbol period, the first bit group includes at least one bit, and the first bit group is one of the plurality of bit groups; and
> a sending module, configured to send the modulated signal.

In some embodiments of this application, a quantity of bits included in each of the plurality of bit groups is in a one-to-one correspondence with a preset modulation order.

In some embodiments of this application, the modulation module is configured to: determine, according to the modulation rule, a plurality of intervals included in the symbol period; and map the first bit group to a zero time point in one of the plurality of intervals.

In some embodiments of this application, a head of the symbol period includes a reserved first time interval, and/or a tail of the symbol period includes a reserved second time interval.

In some embodiments of this application, the modulated symbol stream includes a plurality of modulated symbol blocks, where one modulated symbol block includes M modulated symbols, and M is a positive integer;

> a zero time point corresponding to the first modulated symbol in the one modulated symbol block is located at a starting position of the one modulated symbol block; and
> a zero time point corresponding to the last modulated symbol in the one modulated symbol block is located at an ending position of the one modulated symbol block.

In some embodiments of this application, the modulated symbol stream includes a plurality of modulated symbol blocks, one modulated symbol block includes M modulated symbols, and M is a positive integer; and

> a prefix of the one modulated symbol block includes a reserved first guard interval; and/or
> a suffix of the one modulated symbol block includes a reserved second guard interval.

In some embodiments of this application, the modulation module is configured to generate the modulated signal based on zero time points corresponding to the plurality of modulated symbols in the modulated symbol stream.

In some embodiments of this application, the modulation module is configured to generate the modulated signal in the following manner:

$$s(iT_o) = \prod_{k=0}^{M-1} \sin\left(\frac{\pi}{MT}\left(iT_o - kT - \tau_k - \phi\right)\right),$$

where

$s(iT_o)$ represents a piece of sampling data in the modulated signal, $iT_o$ represents a sampling time point, M represents a quantity of modulated symbols in a modulated symbol block in the modulated symbol stream, T represents a size of a symbol period of a modulated symbol, k represents an index of a $k^{th}$ modulated symbol in a modulated symbol block in the modulated symbol stream, $\tau_k$ represents a zero time point corresponding to a $k^{th}$ modulated symbol in a modulated symbol block in the modulated symbol stream, and $\phi$ represents an initial phase. In the third aspect of this application, a component of the data transmission device may further perform steps described in the first aspect and the possible implementations. For details, refer to the foregoing descriptions in the first aspect and the possible implementations.

According to a fourth aspect, an embodiment of this application further provides a second data transmission device, including:

an obtaining module, configured to obtain a modulated signal; and

a demodulation module, configured to: determine a modulated symbol stream based on the modulated signal, and determine a data stream based on the modulated symbol stream and a preset modulation rule. The modulated symbol stream includes a plurality of modulated symbols. The data stream includes a plurality of bit groups. The modulation rule is: determining a value of a first bit group based on a zero time point of a modulated signal in a symbol period of one modulated symbol. The zero time point is a zero crossing point, in the symbol period, of the modulated signal in the symbol period of the one modulated symbol. The first bit group includes at least one bit, and the first bit group is one of the plurality of bit groups.

In some embodiments of this application, the demodulation module is configured to: oversample the modulated symbol stream by using an analog-to-digital converter ADC, to obtain pattern information in the symbol period; and perform pattern decision on the pattern information in the symbol period to obtain a modulated symbol corresponding to the zero time point.

In some embodiments of this application, the demodulation module is configured to: detect an actual zero time point of the modulated signal; determine a preset zero time point closest to the actual zero time point on a time axis; and determine a modulated symbol corresponding to the preset zero time point closest to the actual zero time point on the time axis.

In some embodiments of this application, a quantity of bits included in each of the plurality of bit groups is in a one-to-one correspondence with a preset modulation order.

In some embodiments of this application, the demodulation module is configured to: determine a plurality of intervals included in the symbol period; and determine a modulated symbol corresponding to a zero time point in each of the plurality of intervals.

In some embodiments of this application, a head of the symbol period includes a reserved first time interval, and/or a tail of the symbol period includes a reserved second time interval.

In some embodiments of this application, the modulated symbol stream includes a plurality of modulated symbol blocks, where one modulated symbol block includes M modulated symbols, and M is a positive integer;

a zero time point corresponding to the first modulated symbol in the one modulated symbol block is located at a starting position of the one modulated symbol block; and
a zero time point corresponding to the last modulated symbol in the one modulated symbol block is located at an ending position of the one modulated symbol block.

In some embodiments of this application, the modulated symbol stream includes a plurality of modulated symbol blocks, one modulated symbol block includes M modulated symbols, and M is a positive integer; and

a prefix of the one modulated symbol block includes a reserved first guard interval; and/or
a suffix of the one modulated symbol block includes a reserved second guard interval.

In the fourth aspect of this application, a component of the data transmission device may further perform steps described in the second aspect and the possible implementations. For details, refer to the foregoing descriptions in the second aspect and the possible implementations.

According to a fifth aspect, an embodiment of this application provides a computer-readable storage medium. The computer-readable storage medium stores instructions. When the instructions are run on a computer, the computer is enabled to perform the method according to the first aspect or the method according to the second aspect.

According to a sixth aspect, an embodiment of this application provides a computer program product including instructions. When the computer program product runs on a computer, the computer is enabled to perform the method according to the first aspect or the method according to the second aspect.

According to a seventh aspect, an embodiment of this application provides a data transmission device. The data transmission device may include an entity such as a terminal device or a chip. The data transmission device includes a processor and a memory. The memory is configured to store instructions. The processor is configured to execute the instructions in the memory, so that the data transmission device performs the method according to the first aspect or the method according to the second aspect.

According to an eighth aspect, this application provides a chip system. The chip system includes a processor, configured to support a data communication device in implementing functions in the foregoing aspects, for example, sending or processing data and/or information in the foregoing method. In a possible design, the chip system further includes a memory. The memory is configured to store program instructions and data that are necessary for the data transmission device. The chip system may include a chip, or may include a chip and another discrete device. According to a ninth aspect, an embodiment of this application provides a data transmission system. The data transmission system includes the first data transmission device according to the third aspect and the second data transmission device according to the fourth aspect.

It can be learned from the foregoing technical solutions that embodiments of this application have the following advantages:

In embodiments of this application, a data stream is obtained. The data stream includes a plurality of bit groups. The data stream is modulated into a modulated symbol stream according to a preset modulation rule, and a modulated signal is generated based on the modulated symbol stream. The modulated symbol stream includes a plurality of modulated symbols. The modulation rule is: determining, in a symbol period of one modulated symbol based on a value of a first bit group, a zero time point corresponding to the first bit group. The zero time point is a zero crossing point of the modulated signal in the symbol period. The first bit group includes at least one bit, and the first bit group is one of the plurality of bit groups. Then, the modulated signal is sent. In embodiments of this application, a plurality of bit groups in the data stream may be modulated to corresponding zero time points according to the modulation rule.

A finally generated modulated signal may carry the zero time points corresponding to the plurality of bit groups. In other words, in embodiments of this application, modulation of the data stream is implemented based on the zero time points, without the need to carry amplitude information in the modulated signal. Therefore, modulation and demodulation based on the zero time points can support high spectral efficiency.

In embodiments of this application, a modulated signal is obtained from a transmit end. A modulated symbol stream is determined based on the modulated signal, and a data stream is determined based on the modulated symbol stream and a preset modulation rule. The modulated symbol stream includes a plurality of modulated symbols. The data stream includes a plurality of bit groups. The modulation rule is: determining a value of a first bit group based on a zero time point of a modulated signal in a symbol period of one modulated symbol. The zero time point is a zero crossing point, in the symbol period, of the modulated signal in the symbol period of the one modulated symbol. The first bit group includes at least one bit, and the first bit group is one of the plurality of bit groups. In embodiments of this application, the obtained modulated signal may carry zero time points corresponding to the plurality of bit groups. In other words, in embodiments of this application, modulation of the data stream is implemented based on the zero time points, and the data stream can be restored without the need to carry amplitude information in the modulated signal. Therefore, modulation and demodulation based on the zero time points can support high spectral efficiency.

**BRIEF DESCRIPTION OF DRAWINGS**

FIG. 1 is a schematic diagram of a structure of a radio access network according to an embodiment of this application;

FIG. 2 is a schematic interaction flowchart of a data transmission method according to an embodiment of this application;

FIG. 3 is a schematic diagram of an implementation framework of a transceiver based on time modulation according to an embodiment of this application;

FIG. 4a is a schematic diagram of a modulated signal sent by a transmit end according to an embodiment of this application;

FIG. 4b is a schematic diagram of demodulating a modulated signal by a receive end according to an embodiment of this application;

FIG. 5 is a schematic diagram of performance comparison between a time modulation scheme and a currently-used oversampling scheme according to an embodiment of this application;

FIG. 6a is a schematic diagram of a value of a modulated signal generated when a modulation order is 2 according to an embodiment of this application;

FIG. 6b is a schematic diagram of a value of a modulated signal generated when a modulation order is 4 according to an embodiment of this application;

FIG. 6c is a schematic diagram of a value of a modulated signal generated when a modulation order is 8 according to an embodiment of this application;

FIG. 7 is a schematic diagram of joint modulation on bit data according to an embodiment of this application;

FIG. 8 is a schematic diagram in which zero time points are located at a starting symbol and an ending symbol according to an embodiment of this application;

FIG. 9a is a schematic diagram of a basic signal before modulation according to an embodiment of this application;

FIG. 9b is a schematic diagram of a modulated signal according to an embodiment of this application;

FIG. 9c is a schematic diagram of a power spectral density of a modulated signal according to an embodiment of this application;

FIG. 10 is a schematic flowchart of generating a modulated signal in an analog domain according to an embodiment of this application;

FIG. 11 is a schematic diagram of a frame structure based on time modulation according to an embodiment of this application;

FIG. 12 is a schematic diagram of a receiver-related procedure and a signal receiving result based on a time-to-digital converter according to an embodiment of this application;

FIG. 13 is a schematic diagram of a receiver-related procedure and a signal receiving result of oversampling based on a 1-bit ADC according to an embodiment of this application;

FIG. 14 is a schematic diagram of a composition structure of a first data transmission device according to an embodiment of this application;

FIG. 15 is a schematic diagram of a composition structure of a second data transmission device according to an embodiment of this application;

FIG. 16 is a schematic diagram of a composition structure of another first data transmission device according to an embodiment of this application; and

FIG. 17 is a schematic diagram of a composition structure of another second data transmission device according to an embodiment of this application.

## DETAILED DESCRIPTION OF EMBODIMENTS

Embodiments of this application provide a data transmission method, apparatus, and system, to support high spectral efficiency through modulation and demodulation based on a zero time point.

The following describes embodiments of this application with reference to the accompanying drawings.

In this specification, claims, and the accompanying drawings of this application, the terms "first", "second", and the like are intended to distinguish between similar objects but do not necessarily indicate a specific order or sequence. It should be understood that such terms are interchangeable in proper circumstances, and this is merely a distinguishing manner used to describe objects having a same attribute in description of embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

The technical solutions in embodiments of this application may be applied to various communication systems for data processing, such as a code division multiple access (code division multiple access, CDMA) system, a time division multiple access (time division multiple access, TDMA) system, a frequency division multiple access (frequency division multiple access, FDMA) system, an orthogonal frequency-division multiple access (orthogonal frequency-division multiple access, OFDMA) system, a single-carrier frequency division multiple access (single-carrier FDMA, SC-FDMA) system, and another system. The terms "system" and "network" may be used interchangeably. The CDMA system may implement wireless technologies such as universal terrestrial radio access (universal terrestrial radio access, UTRA) and CDMA2000. The UTRA may include a wideband CDMA (wideband CDMA, WCDMA) technology and another variant technology of CDMA. The CDMA2000 may cover the interim standard (interim standard, IS) 2000 (IS-2000), the IS-95, and the IS-856 standard. A wireless technology such as a global system for mobile communications (global system for mobile communications, GSM) may be implemented in the TDMA system. Wireless technologies such as evolved universal terrestrial radio access (evolved UTRA, E-UTRA), ultra mobile broadband (ultra mobile broadband, UMB), IEEE 802.11 (Wi-Fi), IEEE 802.16 (WiMAX), IEEE 802.20, and Flash OFDMA may be implemented in the OFDMA system. The UTRA and the E-UTRA correspond to UMTS and are evolved versions of the UMTS. Long term evolution (long term evolution, LTE) and various versions evolved based on LTE in 3GPP are new UMTS versions that use E-UTRA. A 5th generation (5 Generation, "5G" for short) communication system, new radio (New Radio, "NR" for short), and a future 6th generation (6th generation, 6G) mobile communication system are next generation communication systems under study. The technical solutions in embodiments of this application may be applied to various communication systems such as V2X, LTE-V, V2V, internet of vehicles, MTC, IoT, LTE-M, M2M, and Internet of things. In addition, the communication systems may be further used in future-oriented communication technologies, to which the technical solutions provided in embodiments of this application are also applicable. A system architecture and a service scenario described in embodiments of this application are intended to describe the technical solutions in the embodiments of this application more clearly, and do not constitute a limitation on the technical solutions provided in embodiments of this application. A person of ordinary skill in the art may know that with evolution of a network architecture and emergence of a new service scenario, the technical solutions provided in embodiments of this application are also applicable to similar technical problems.

The communication system provided in embodiments of this application may include a first data transmission device and a second data transmission device. Data transmission may be performed between the first data transmission device and the second data transmission device. For example, the first data transmission device may include a terminal device, and the second data transmission device may include a network device. Alternatively, the first data transmission device may include a terminal device, and the second data transmission device may include another terminal device. Alternatively, the first data transmission device may include a network device, and the second data transmission device may include another network device. Alternatively, for example, the first data transmission device may include a network device, and the second data transmission device may include a terminal device. Alternatively, the first data transmission device may include a network device, and the second data transmission device may include another terminal device.

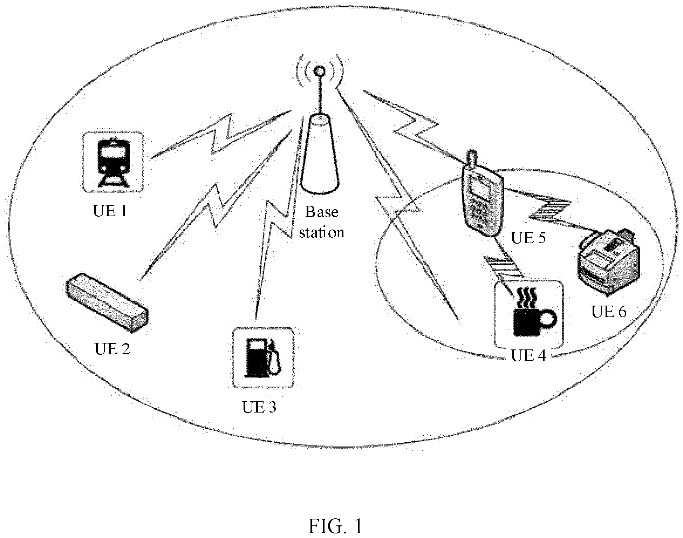

FIG. 1 is a schematic diagram of a possible structure of a radio access network (radio access network, RAN) according to an embodiment of this application. The RAN may be a base station access system in a 2G network (that is, the RAN includes a base station and a base station controller), may be a base station access system in a 3G network (that is, the RAN includes a base station and an RNC), may be a base station access system in a 4G network (that is, the RAN includes an eNB and an RNC), or may be a base station access system in a 5G network.

The RAN includes one or more network devices. The network device may be any device having a wireless transceiver function, or a chip disposed in a device having a wireless transceiver function. The network device includes but is not limited to a base station (for example, a base station BS, a base station NodeB, an evolved NodeB eNodeB or eNB, a base station gNodeB or a gNB in a 5th generation 5G communication system, a base station in a future communication system, or an access node, a wireless relay node, or a wireless backhaul node in a Wi-Fi system), or the like. The base station may be a macro base station, a micro base station, a picocell base station, a small cell, a relay station, or the like. A plurality of base stations may support a network using the foregoing one or more technologies, or an evolved network in the future. A core network may support a network using the foregoing one or more technologies, or an evolved network in the future. The base station may include one or more co-site or non-co-site transmission reception points (transmission reception points, TRPs). The network device may alternatively be a radio controller, a central unit (central unit, CU), a distributed unit (distributed unit, DU), or the like in a cloud radio access network (cloud radio access network, CRAN) scenario. The network device may alternatively be a server, a wearable device, a vehicle-mounted device, or the like. The network device being a base station is used as an example for description below. The plurality of network devices may be base stations of a same type, or may be base stations of different types. The base station may communicate with terminal devices 1 to 6, or may communicate with the terminal devices 1 to 6 through a relay station. The terminal devices 1 to 6 may support communication with a plurality of base stations using different technologies. For example, the terminal devices may support communication with a base station supporting an LTE network, may support communication with a base station supporting the 5G network, or may support dual connections to the base station in the LTE network and the base station in the 5G network. For example, the terminals can communicate with a RAN node that connects the terminals to a wireless network. Currently, for example, the RAN node may be a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), or a wireless fidelity (wireless fidelity, Wi-Fi) access point (access point, AP). In a network structure, the network device may include a central unit (central unit, CU) node, a distributed unit (distributed unit, DU) node, or a RAN device including a CU node and a DU node.

The terminal devices 1 to 6 each are also referred to as user equipment (user equipment, UE), a mobile station (mobile station, MS), a mobile terminal (mobile terminal, MT), a terminal, or the like, and each are a device that provides voice and/or data connectivity for a user or a chip disposed in the device, for example, a handheld device or a vehicle-mounted device having a wireless connection function. Currently, for example, the terminal device may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), or a wireless terminal in a smart home (smart home). The terminal device provided in this embodiment of this application may be a low-complexity terminal device and/or a terminal device in coverage enhancement mode A. For example, a terminal device provided in this embodiment of this application may be a terminal device that supports multi-transport block scheduling, and another terminal device may be a terminal device that does not support multi-transport block scheduling, where not supporting multi-transport block scheduling means using single transport block scheduling.

In this embodiment of this application, the base station and UE 1 to UE 6 are included in a communication system. In the communication system, the base station sends one or more of system information, a RAR message, and a paging message to one or more of UE 1 to UE 6. In addition, UE 4 to UE 6 are also included in a communication system. In the communication system, UE 5 may implement a function of the base station. In other words, UE 5 may send one or more of system information, control information, and a paging message to one or both of UE 4 and UE 6.

A data transmission method provided in embodiments may be applied to a communication system using a simply configured receiver, for example, a receiver that uses a 1-bit ADC or a time-to-digital converter to perform signal detection. For example, the communication system may be a system with an ultra-large bandwidth of millimeter wave/terahertz. Alternatively, the data transmission method may be applied to a device with ultra-low power consumption such as an IoT device.

Transmission may be interpreted as sending or receiving in this application. When one side of communication performs sending, a peer device of the communication performs receiving.

Before signal transmission is performed, a waveform of a signal may be modulated, so that a requirement on an ADC can be reduced. This is one of key technologies for implementing effective millimeter wave/terahertz transmission. For example, a quantization bit width of the ADC is 1 bit, that is, the ADC performs 1-bit quantization on a sampled level, and obtains pattern information as {+1, -1}. Such ADC is referred to as "1-bit ADC" for short. The 1-bit ADC can greatly simplify implementation of the ADC, and a design of a communication system based on the 1-bit ADC can also be greatly simplified, for example, automatic gain control (automatic gain control, AGC) is not required. The 1-bit ADC is also applicable to an Internet of things (internet of things, IoT) device with a requirement of ultra-low power consumption. A receiver of the 1-bit ADC may have amplitude information lost. A signal after ADC has only two states: +1 and -1, and spectral efficiency is 1 bit.

In an existing modulation method, an amplitude is used to carry information, and an ADC may have amplitude information lost. Therefore, the data transmission system including the foregoing ADC cannot effectively use an amplitude-based modulation method, and cannot support high spectral efficiency.

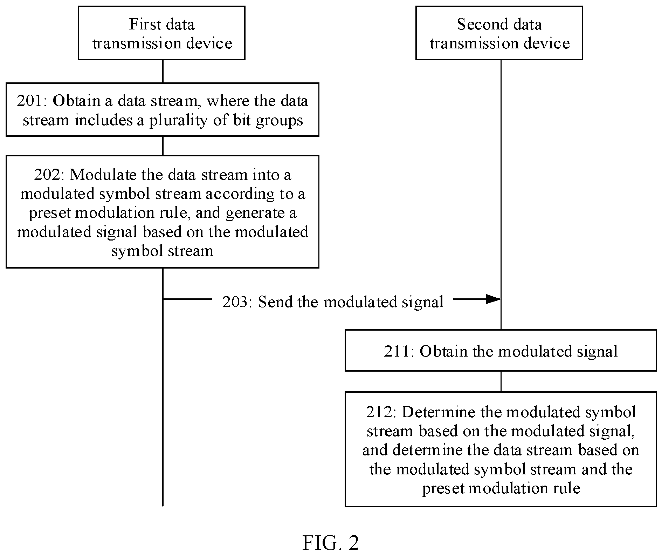

In view of this, an embodiment of this application provides a data transmission method. FIG. 2 is a schematic interaction flowchart of a data transmission method according to an embodiment of this application. Subsequent step 201 to step 203 are described from a first data transmission device side (referred to as a transmit end below), and subsequent step 211 to step 213 are described from a second data transmission device side (referred to as a receive end below). The method mainly includes the following steps.

201: Obtain a data stream, where the data stream includes a plurality of bit groups.

The transmit end may establish a communication link with the receive end, for example, a wired communication link or a wireless communication link. The transmit end first obtains a data stream, where the data stream may be a bit stream obtained after channel encoding.

For example, the transmit end may obtain the data stream by grouping, based on a modulation order, the code stream obtained after channel encoding.

In this embodiment of this application, a plurality of bit groups may be obtained from the data stream. A quantity of bit groups in the data stream is not limited. Each of the plurality of bit groups carries data information.

202: Modulate the data stream into a modulated symbol stream according to a preset modulation rule, and generate a modulated signal based on the modulated symbol stream. The modulated symbol stream includes a plurality of modulated symbols. The modulation rule is: determining, in a symbol period of one modulated symbol based on a value of a first bit group, a zero time point corresponding to the first bit group. The zero time point is a zero crossing point of the modulated signal in the symbol period. The first bit group includes at least one bit, and the first bit group is one of the plurality of bit groups.

After obtaining the data stream, the transmit end modulates the data stream according to the preset modulation rule, to obtain the modulated symbol stream, and then generates the modulated signal by using the modulated symbol stream. The modulated signal may be a to-be-sent continuous signal. The modulation rule may be prestored in the transmit end, or may be obtained by the transmit end before modulating the data stream. The modulation rule used in this embodiment of this application is different from existing amplitude modulation. To be specific, in this embodiment of this application, the data information is directly modulated to time (or referred to as a time point), and the receive end performs demodulation by using time information. Therefore, data transmission with high spectral efficiency can be performed without using amplitude information.

The following describes the modulation rule used in this embodiment of this application by using modulation schemes of the plurality of bit groups in the data stream. For example, the first bit group is one of the plurality of bit groups, the first bit group may be any bit group in the plurality of bit groups, and the first bit group includes at least one bit. A quantity of bits included in the first bit group is not limited in this embodiment of this application. For example, the first bit group may include one bit, two bits, or more bits. In this embodiment of this application, the data stream may be modulated to obtain a modulated symbol stream. The modulated symbol stream includes a plurality of modulated symbols. A quantity of modulated symbols included in the modulated symbol stream is not limited in this embodiment of this application. Based on the foregoing example scenario, the modulation rule used by the transmit end in this embodiment of this application is determining, in a symbol period of a modulated symbol based on the value of the first bit group, the zero time point corresponding to the first bit group. In other words, the value of the first bit group may correspond to the zero time point. The zero time point may also be referred to as a zero time, a zero position, or the like. In the generated modulated signal, the zero time point is a zero crossing point of the modulated signal in the symbol period. In other words, in this embodiment of this application, the data information is carried through the zero time point to which the bit group is mapped. Therefore, time-based modulation can be implemented without using amplitude modulation.

For example, the transmit end may map encoded bit data (referred to as bits for short below) to a preset zero time according to the predetermined modulation rule. The time indicates a zero position of a signal in each symbol period, and a to-be-transmitted modulated signal may be generated based on a time obtained through modulation.

In some embodiments of this application, a quantity of bits included in each of the plurality of bit groups is in a one-to-one correspondence with a preset modulation order.

In this embodiment of this application, the quantity of bits included in each bit group is in a one-to-one correspondence with the preset modulation order. For example, if the modulation order is 4, the bit group in the data stream includes $\log_2(4) = 2$ bits. In this embodiment of this application, the transmit end may group bits of the data stream based on the modulation order, to obtain the plurality of bit groups in the data stream.

In some embodiments of this application, the modulating the data stream into a modulated symbol stream according to a preset modulation rule in step 202 includes the following steps:

> A1: Determine, according to the modulation rule, a plurality of intervals included in the symbol period.
> A2: Map the first bit group to a zero time point in one of the plurality of intervals.

In this embodiment of this application, a modulation process of the first bit group is used as an example for description of modulation of the data stream. For example, the transmit end determines, according to the modulation rule, a plurality of intervals included in one symbol period. A quantity of intervals in one modulation periodicity is not limited. When there is only one zero time point in each of the plurality of intervals in the symbol period, the first bit group is mapped to an interval in the plurality of intervals based on the value of the first bit group. For example, each symbol period is evenly divided into four intervals, which represent 2-bit information. The bit stream is grouped per two bits, and time modulation is performed on each bit group according to the following mapping rule: 00-->T/8, 01-->3T/8, 10-->5T/8, 11-->7T/8. Values of different bit groups may be modulated to zero time points in different intervals. Therefore, data information may be carried through time modulation. In this embodiment of this application, with more partitions, the zero time point in the symbol period can facilitate implementation of higher-order modulation and higher spectral efficiency.

In some embodiments of this application, a head of the symbol period includes a reserved first time interval, and/or a tail of the symbol period includes a reserved second time interval.

A value of the first time interval may be the same as or different from a value of the second time interval. A specific implementation depends on an application scenario. This is not limited herein. In this embodiment of this application, time positions of the modulated symbols are maximally evenly distributed in one symbol period, and some time intervals may be reserved at the head and tail of the symbol period, to ensure an interval between zero points of two adjacent symbols.

In some embodiments of this application, the modulated symbol stream includes a plurality of modulated symbol blocks, where one modulated symbol block includes M modulated symbols, and M is a positive integer;

> a zero time point corresponding to the first modulated symbol in the one modulated symbol block is located at a starting position of the one modulated symbol block; and
> a zero time point corresponding to the last modulated symbol in the one modulated symbol block is located at an ending position of the one modulated symbol block.

One modulated symbol block (referred to as a symbol block for short below) in the modulated symbol stream includes M modulated symbols. A value of M is not limited. In this embodiment of this application, a zero time point of a middle modulated symbol other than the first modulated symbol and the last modulated symbol in the modulated symbol block is determined based on a same bit group and the modulation rule. A zero time point corresponding to the first modulated symbol in one modulated symbol block is located at a starting position of the one modulated symbol block, and a zero time point corresponding to the last modulated symbol in the one modulated symbol block is located at an ending position of the one modulated symbol block. In a modulated symbol block generated in this manner, zero time points are defined at the starting position and the ending position of the symbol block. This ensures that each modulated symbol block starts with a zero value and ends with a zero value, and signals between the modulated symbol blocks are smoothly connected.

In some embodiments of this application, the modulated symbol stream includes a plurality of modulated symbol blocks, one modulated symbol block includes M modulated symbols, and M is a positive integer; and

> a prefix of the one modulated symbol block includes a reserved first guard interval (guard interval, GI); and/or
> a suffix of the one modulated symbol block includes a reserved second guard interval.

A value of the first guard interval may be the same as or different from a value of the second guard interval. A specific implementation depends on an application scenario. This is not limited herein. In this embodiment of this application, the prefix of the modulated symbol block refers to a position of a starting symbol of the modulated symbol block, and the suffix of the modulated symbol block refers to a position of an ending symbol of the modulated symbol block. Because a filter or the like may cause distortion of the starting symbol and the ending symbol of the modulated symbol block, guard intervals may be respectively inserted into a starting position and an ending position of the modulated symbol block. The guard interval may be a specific symbol or a null guard interval. A smooth filter may further be introduced for a generated modulated symbol block to improve power of an out-of-band signal.

In some embodiments of this application, the generating a modulated signal based on the modulated symbol stream includes the following step:

B1: Generate the modulated signal based on zero time points corresponding to the plurality of modulated symbols in the modulated symbol stream.

After obtaining the modulated symbol stream, the transmit end determines the zero time points corresponding to the plurality of modulated symbols in the modulated symbol stream, and generates the modulated signal based on the zero time points. Therefore, the modulated signal generated in this embodiment of this application may be obtained through time modulation. The zero time point carries data information.

Further, in some embodiments of this application, the generating the modulated signal based on zero time points corresponding to the plurality of modulated symbols in the modulated symbol stream in step A1 includes:

generating the modulated signal in the following manner:

$$s(iT_o) = \prod_{k=0}^{M-1} \sin\left(\frac{\pi}{MT}(iT_o - kT - \tau_k - \phi)\right),$$

where

$s(iT_o)$ represents a piece of sampling data in the modulated signal, $iT_o$ represents a sampling time point, M represents a quantity of modulated symbols in a modulated symbol block in the modulated symbol stream, T represents a size of a symbol period of a modulated symbol, k represents an index of a $k^{th}$ modulated symbol in a modulated symbol block in the modulated symbol stream, $\tau_k$ represents a zero time point corresponding to a $k^{th}$ modulated symbol in a modulated symbol block in the modulated symbol stream, and $\phi$ represents an initial phase. In this embodiment of this application, the foregoing manner of generating $s(iT_o)$ is implemented based on sampling, so as to generate a to-be-sent modulated signal based on the zero time points obtained through modulation. Without limitation, another manner may also be used to generate the modulated signal in this embodiment of this application. For details, refer to examples in subsequent embodiments.

203: Send the modulated signal.

After the transmit end generates the modulated signal through the foregoing step 201 and step 202, the transmit end may send the modulated signal to the receive end, to implement data transmission based on time modulation on the transmit end side.

The foregoing step 201 to step 203 describe the data transmission method from the transmit end. The following describes the data transmission method in embodiments of this application from a receive end side. Referring to FIG. 2, the method mainly includes the following procedure:

211: Obtain a modulated signal.

After the transmit end generates the modulated signal, the transmit end may send the modulated signal to the receive end. The receive end may first obtain the modulated signal, where the modulated signal is provided by the transmit end.

212: Determine a modulated symbol stream based on the modulated signal, and determine a data stream based on the modulated symbol stream and a preset modulation rule. The modulated symbol stream includes a plurality of modulated symbols. The data stream includes a plurality of bit groups. The modulation rule is: determining a value of a first bit group based on a zero time point of a modulated signal in a symbol period of one modulated symbol. The zero time point is a zero crossing point, in the symbol period, of the modulated signal in the symbol period of the one modulated symbol. The first bit group includes at least one bit, and the first bit group is one of the plurality of bit groups.

It should be noted that, the receive end should use a demodulation rule when performing a demodulation method. However, because the demodulation rule has a same principle with a modulation rule in the foregoing embodiment, in which a correspondence between a zero crossing point and a value of a bit group is used, the demodulation rule is still expressed as the modulation rule in this embodiment of this application without ambiguity.

After obtaining the modulated signal, the receive end determines the modulated symbol stream based on the modulated signal, where the modulated signal is a continuous signal. The modulated symbol stream may be obtained by sampling the modulated signal, and the modulated symbol stream includes a plurality of modulated symbols. The receive end may obtain the data stream by using the preset modulation rule and the modulated symbol stream. The modulation rule may be prestored in the receive end, or may be obtained by the receive end before demodulating the modulated signal. The modulation rule used in this embodiment of this application is different from existing amplitude modulation. To be specific, in this embodiment of this application, data information is directly modulated to time (or referred to as a time point), and the receive end performs demodulation by using time information. Therefore, data transmission can be performed without using amplitude information.

For example, the receive end performs time detection on the received modulated signal to obtain zero time points in all symbol periods, performs demodulation based on the detected zero time points, and then performs channel decoding to restore a data stream from the transmit end. In this embodiment of this application, the data information is directly modulated to time (or referred to as a time point), and the receive end performs demodulation by using time information. Therefore, data transmission can be performed without using the amplitude information.

In some embodiments of this application, the determining a modulated symbol stream based on the modulated signal in step 212 includes:

> oversampling the modulated signal by using an ADC, to obtain pattern information in the symbol period; and
> performing pattern decision on the pattern information in the symbol period to obtain a modulated symbol corresponding to the zero time point.

The receive end may process the modulated signal through the ADC. For example, the ADC may be the foregoing analog-to-digital converter ADC with a 1-bit quantization width. Another type of ADC may be used in this embodiment of this application. This is not limited herein. For example, the receive end may oversample the modulated signal by using the ADC, to obtain the pattern information in the symbol period, and then perform pattern decision on the pattern information in the symbol period to obtain the modulated symbol corresponding to the zero time point.

For example, because each symbol has only one zero point at a zero time point obtained through modulation, the data information may alternatively be reflected on a pattern existing after 1-bit quantization is performed on the signal. A receiver may perform oversampling by using a 1-bit ADC to obtain pattern information of the signal, and perform pattern decision on the pattern information for demodulation. A sampling rate of the 1-bit ADC is not less than a symbol rate multiplied by a modulation order, to distinguish between different zero positions. A higher oversampling rate indicates more distinguishable time information and better demodulation performance.

In some embodiments of this application, the determining a modulated symbol stream based on the modulated signal in step 212 includes:

> detecting an actual zero time point of the modulated signal;
> determining a preset zero time point closest to the actual zero time point on a time axis; and
> determining a modulated symbol corresponding to the preset zero time point closest to the actual zero time point on the time axis.

After the modulated signal passes through a channel, a position of a zero crossing point changes. The receive end detects an actual zero time point of the modulated signal, where the actual zero time point is a zero position detected from the modulated signal. Because the position of the zero crossing point may change, after detecting an actual zero time point of the modulated signal in each symbol period, the receive end needs to perform decision based on the actual zero time point, determine a preset zero time point closest to the actual zero time point on the time axis, and then determine the modulated symbol based on the preset zero time point. The foregoing process may alternatively be implemented by using a time-to-digital converter.

An example is used for description herein. The time-to-digital converter is a device for sampling and quantizing a time signal. Because the transmit end modulates the signal at a zero position (namely, a zero time point) of the signal, the use of the time-to-digital converter is a direct and effective manner of parsing the modulated signal. The time-to-digital converter may directly sample the zero position, namely, time information, of the signal; and perform soft/hard demodulation and subsequent channel decoding on received zero point information according to a modulation scheme. In some embodiments of this application, a quantity of bits included in each of the plurality of bit groups is in a one-to-one correspondence with a preset modulation order.

In this embodiment of this application, the quantity of bits included in each bit group is in a one-to-one correspondence with the preset modulation order. For example, if the modulation order is 4, the bit group in the data stream includes $\log_2(4) = 2$ bits. In this embodiment of this application, the transmit end may group bits of the data stream based on the modulation order, to obtain the plurality of bit groups in the data stream.

In some embodiments of this application, the determining a modulated symbol stream based on the modulated signal in step 212 includes:

> determining a plurality of intervals included in the symbol period; and
> determining a modulated symbol corresponding to a zero time point in each of the plurality of intervals.

The receive end determines, according to the modulation rule, a plurality of intervals included in one symbol period. A quantity of intervals in one modulation periodicity is not limited. When there is only one zero time point in each of the plurality of intervals in the symbol period, the modulated symbol is determined based on positions of zero time points in the intervals in the symbol period. For example, each symbol period is evenly divided into four intervals, which represent 2-bit information. The bit stream is grouped per two bits, and time demodulation is performed on each bit group according to the following mapping rule: T/8-->00, 3T/8-->01, 5T/8-->10, 7T/8-->11. The modulated symbol is determined based on positions of zero time points in the intervals in the symbol period. Therefore, data information may be carried through time modulation. In this embodiment of this application, with more partitions, the zero time point in the symbol period can facilitate implementation of higher-order modulation and higher spectral efficiency.

In some embodiments of this application, a head of the symbol period includes a reserved first time interval, and/or
a tail of the symbol period includes a reserved second time interval.

A value of the first time interval may be the same as or different from a value of the second time interval. A specific implementation depends on an application scenario. This is not limited herein. In this embodiment of this application, time positions of the modulated symbols are maximally evenly distributed in one symbol period, and some time intervals may be reserved at the head and tail of the symbol period, to ensure an interval between zero points of two adjacent symbols.

In some embodiments of this application, the modulated symbol stream includes a plurality of modulated symbol blocks, where one modulated symbol block includes M modulated symbols, and M is a positive integer;

a zero time point corresponding to the first modulated symbol in the one modulated symbol block is located at a starting position of the one modulated symbol block; and
a zero time point corresponding to the last modulated symbol in the one modulated symbol block is located at an ending position of the one modulated symbol block.

One modulated symbol block (referred to as a symbol block for short below) in the modulated symbol stream includes M modulated symbols. A value of M is not limited. In this embodiment of this application, a zero time point of a middle modulated symbol other than the first modulated symbol and the last modulated symbol in the modulated symbol block is determined based on a same bit group and the modulation rule. A zero time point corresponding to the first modulated symbol in one modulated symbol block is located at a starting position of the one modulated symbol block, and a zero time point corresponding to the last modulated symbol in the one modulated symbol block is located at an ending position of the one modulated symbol block. In a modulated symbol block generated in this manner, zero time points are defined at the starting position and the ending position of the symbol block. This ensures that each modulated symbol block starts with a zero value and ends with a zero value, and signals between the modulated symbol blocks are smoothly connected.

In some embodiments of this application, the modulated symbol stream includes a plurality of modulated symbol blocks, one modulated symbol block includes M modulated symbols, and M is a positive integer; and

a prefix of the one modulated symbol block includes a reserved first guard interval; and/or
a suffix of the one modulated symbol block includes a reserved second guard interval.

A value of the first guard interval may be the same as or different from a value of the second guard interval. A specific implementation depends on an application scenario. This is not limited herein. In this embodiment of this application, the prefix of the modulated symbol block refers to a position of a starting symbol of the modulated symbol block, and the suffix of the modulated symbol block refers to a position of an ending symbol of the modulated symbol block. Because a filter or the like may cause distortion of the starting symbol and the ending symbol of the modulated symbol block, guard intervals may be respectively inserted into a starting position and an ending position of the modulated symbol block. The guard interval may be a specific symbol or a null guard interval. A smooth filter may further be introduced for a generated modulated symbol block to improve power of an out-of-band signal.

It can be learned from the example descriptions in the foregoing embodiments that, a data stream is obtained. The data stream includes a plurality of bit groups. The data stream is modulated into a modulated symbol stream according to a preset modulation rule, and a modulated signal is generated based on the modulated symbol stream. The modulated symbol stream includes a plurality of modulated symbols. The modulation rule is: determining, in a symbol period of one modulated symbol based on a value of a first bit group, a zero time point corresponding to the first bit group. The zero time point is a zero crossing point of the modulated signal in the symbol period. The first bit group includes at least one bit, and the first bit group is one of the plurality of bit groups. Then, the modulated signal is sent. In this embodiment of this application, a plurality of bit groups in the data stream may be modulated to corresponding zero time points according to the modulation rule. A finally generated modulated signal may carry the zero time points corresponding to the plurality of bit groups. In other words, in this embodiment of this application, modulation of the data stream is implemented based on the zero time points, without the need to carry amplitude information in the modulated signal. Therefore, modulation and demodulation based on the zero time points can support high spectral efficiency.

For better understanding and implementation of the foregoing solutions in embodiments of this application, specific descriptions are provided below by using corresponding application scenarios as examples.

According to the data transmission method based on time modulation provided in embodiments of this application, data information can be directly modulated to a zero time point of a signal, and a receive end performs demodulation by using the zero time point carried in the signal, so that amplitude modulation does not need to be performed on the signal.

An embodiment of this application provides a communication system based on time modulation. The communication system includes a modulated symbol design, a frame structure design, a signal generation method, and a receiver. For a receiver without a high-precision ADC, spectral efficiency and demodulation performance of the system needs to be improved.

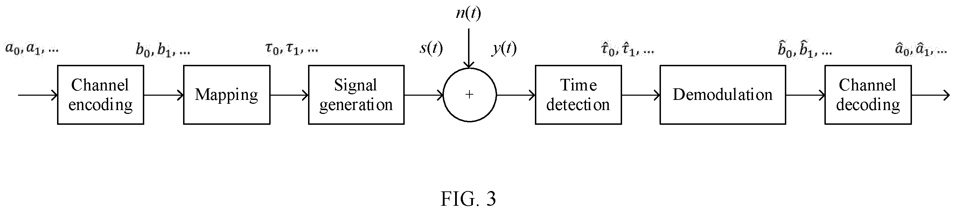

FIG. 3 is a schematic diagram of an implementation framework of a transceiver based on time modulation according to an embodiment of this application. The implementation framework includes processes such as channel encoding, mapping, signal generation, time detection, demodulation, and channel decoding.

First, a transmit end performs channel encoding on a bit stream (for example, $a_0$, $a_1$, ...) and obtains a data stream (for example, bo, bi, ...); and then performs time-based mapping on the data stream to obtain a modulated symbol stream (for example, $\tau_0, \tau_1$, ...). Then, the transmit end performs signal generation on the modulated symbol stream to obtain a modulated signal s(t), and sends the modulated signal to a receive end, where n(t) represents channel noise. After receiving a modulated signal y(t), the receive end performs time-based detection to obtain a modulated symbol stream (for example, $\hat{\tau}_0, \hat{\tau}_1$, ...), then demodulates the modulated symbol stream to obtain a demodulated data stream ($\hat{b}_0, \hat{b}_1$, ...), and performs channel decoding on the data stream to restore a bit stream (for example, $\hat{a}_0, \hat{a}_1$, ...).

The following describes the foregoing data transmission procedure by using an example. The transmit end obtains a bit stream after channel encoding, groups the bit stream based on a modulation order to obtain a data stream, where the data stream includes a plurality of bit groups, and maps bits in each group to a corresponding zero time (namely, the foregoing zero time point, which is referred to as time for short below). The time indicates a zero position of a modulated signal (referred to as a signal for short below) in each symbol period. A to-be-sent signal is generated based on modulated time information through the following formula:

$$s(t) = \prod_{k=0}^{M-1} sin\left(\frac{\pi}{MT}(t - kT - \tau_k - \phi)\right),$$

where

for meanings of physical quantities in the foregoing formula, refer to the foregoing content, and details are not described herein again.

The receive end may detect a zero position of the signal in each symbol period through a time-to-digital converter, and perform demodulation and subsequent channel decoding based on the received time information. The foregoing demodulation process is a process of processing one channel of signal. When the foregoing demodulation process is performed separately on I channel and Q channel of the signal, two orthogonal channels of signal are obtained.

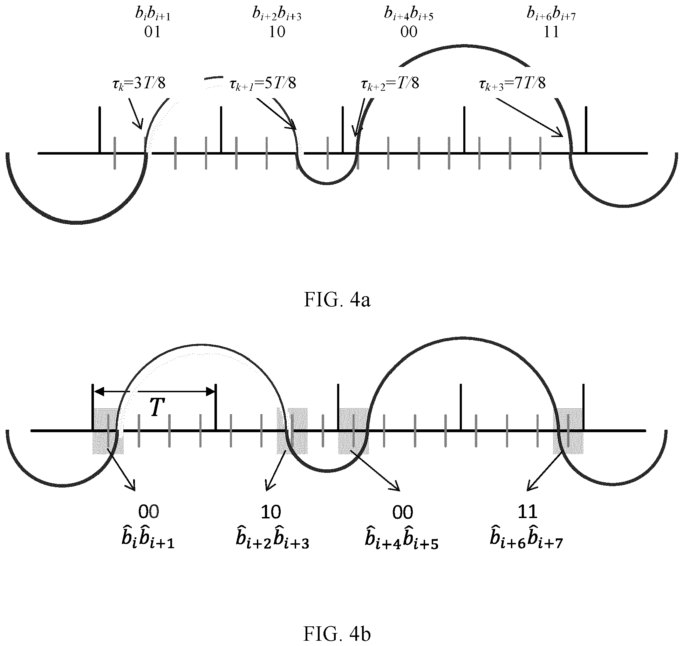

The following describes signal sending and receiving in this embodiment by using an example. FIG. 4a is a schematic diagram of a modulated signal sent by a transmit end according to an embodiment of this application. FIG. 4b is a schematic diagram of demodulating a modulated signal by a receive end according to an embodiment of this application. For example, each symbol period is evenly divided into four intervals, which represent 2-bit information. A bit stream is grouped per two bits, and time modulation is performed on each bit group according to the following mapping rule: 00-->T/8, 01-->3T/8, 10-->5T/8, 11-->7T 18. Then, a to-be-sent modulated signal is generated according to the foregoing formula of s(t), and the modulated signal is sent to the receive end. For example, a modulated symbol corresponding to a bit group $b_ib_{i+1}$ is 01, a modulated symbol corresponding to a bit group $b_{i+2}b_{i+3}$ is 10, a modulated symbol corresponding to a bit group $b_{i+4}b_{i+5}$ is 00, and a modulated symbol corresponding to a bit group $b_{i+6}b_{i+7}$ is 11.

After the modulated signal passes through a channel, a position of a zero crossing point changes. The receive end detects a zero position of the signal in each symbol period through a time-to-digital converter or a 1-bit ADC for oversampling, determines a zero position that is closest to the receive end and pre-specified by the transmit end, and demodulates bit data of the transmit end. For example, a modulated symbol corresponding to a bit group $\hat{b}_i\hat{b}_{i+1}$ after decision is 01, a modulated symbol corresponding to a bit group $\hat{b}_{i+2}\hat{b}_{i+3}$ after decision is 10, a modulated symbol corresponding to a bit group $\hat{b}_{i+4}\hat{b}_{i+5}$ after decision is 00, and a modulated symbol corresponding to a bit group $\hat{b}_{i+6}\hat{b}_{i+7}$ after decision is 11.

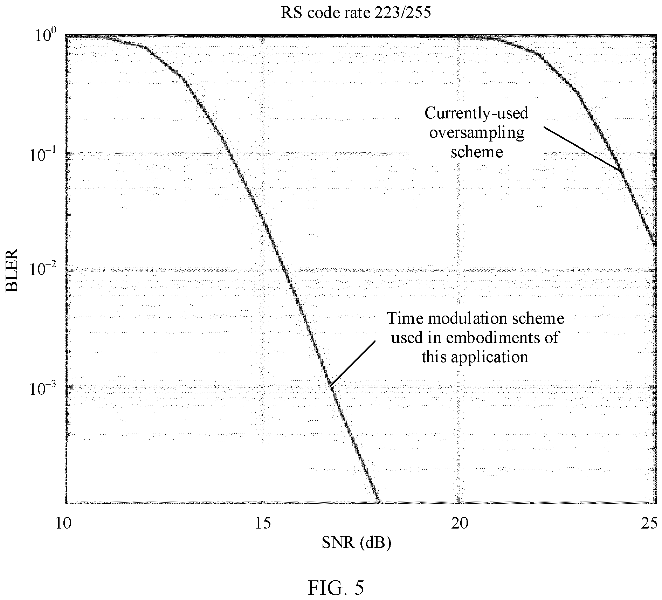

The following describes, by using an example, an effect of high spectral efficiency that can be supported in this embodiment of this application. FIG. 5 is a schematic diagram of performance comparison between a time modulation scheme and a currently-used oversampling scheme according to an embodiment of this application. Performance of the time modulation scheme provided in this embodiment of this application is compared with performance of the existing oversampling scheme. In the time modulation scheme provided in this embodiment of this application, a modulation order is 4, and spectral efficiency of a single channel is 2 bits/symbol. In the existing oversampling scheme, 16 quadrature amplitude modulation (quadrature amplitude modulation, QAM) and a root-raised cosine filter (root-raised cosine filter) (a roll-off coefficient $\alpha$ is 0.7) are used, spectral efficiency of a single channel is 1.5 bits/symbol, channel coding uses Reed-Solomon codes (Reed-Solomon codes, RS) of a code rate of 223/255, noise of a channel is additive white Gaussian noise (additive white Gaussian noise, AWGN), and a receiver performs oversampling and hard demodulation through a 1-bit ADC. According to the time modulation scheme provided in this embodiment of this application, higher transmission efficiency can be easily designed, for example, 2 bits per symbol (bit/symbol) on a single channel. However, the existing oversampling scheme is limited by a shaping filter, with transmission efficiency of only 1.5 bits/symbol. Therefore, the time modulation scheme provided in this embodiment of this application can achieve better performance than the existing oversampling scheme.

In this embodiment of this application, bit information of a data stream is modulated at a time position, and a receive end performs time detection through a time-to-digital converter or a 1-bit ADC for oversampling, so that better demodulation performance can be implemented. In this embodiment of this application, the time position is divided into more intervals to implement higher-order modulation and higher spectral efficiency. In addition, higher-order modulation and higher spectral efficiency can be implemented by only setting a plurality of intervals in a symbol period. This has an advantage of simple design. In this embodiment of this application, a bandwidth-limited signal may be expressed as the foregoing formula of s(t). Conversely, a signal generated according to the formula meets a bandwidth limitation, that is, each symbol in the signal has only one real zero. This ensures a bandwidth of a to-be-sent signal.

The following describes, by using an example, a method for designing a modulated symbol provided in an embodiment of this application. It can be learned from FIG. 4a and FIG. 4b that an amplitude of a signal between two zero points is in a single-peak shape (that is, only one peak occurs), and an amplitude of a signal generated by a transmit end is related to a modulated symbol (namely, an interval between zero points). A larger interval between the zero points indicates a higher amplitude of the signal and a stronger noise resistance capability. Time positions of modulated symbols are maximally evenly distributed in one symbol period. To ensure an interval between zero points of two adjacent symbols, some intervals may be reserved at a head and a tail of the symbol period.

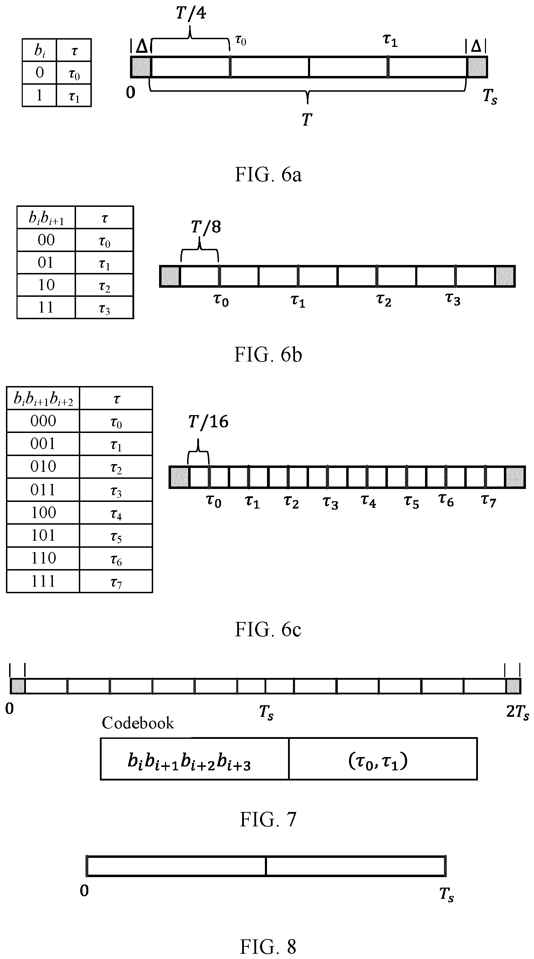

FIG. 6a is a schematic diagram of a value of a modulated signal generated when a modulation order is 2 according to an embodiment of this application. FIG. 6b is a schematic diagram of a value of a modulated signal generated when a modulation order is 4 according to an embodiment of this application. FIG. 6c is a schematic diagram of a value of a modulated signal generated when a modulation order is 8 according to an embodiment of this application. FIG. 6a to FIG. 6c show examples of modulation given different orders. A higher order indicates more time levels in each symbol period and more information that can be carried. A shorter distance between corresponding zero points indicates a higher signal-to-noise ratio required for demodulation. It is not limited that in this embodiment of this application, if information can still be represented when there is no real zero point in the symbol period, a zero point in the symbol period may be defined as a complex zero point.

In this embodiment of this application, before coded bits are modulated, a bit interleaving operation may further be performed, to resist burst interference, an uneven error caused by high-order modulation, or the like. A bit mapping manner may be Gray (Gray) mapping or set partitioning mapping.

In this embodiment of this application, to better control distribution of zero points, a plurality of symbols may be jointly modulated. FIG. 7 is a schematic diagram of joint modulation on bit data according to an embodiment of this application. For example, joint modulation is performed in two symbol periods. Zeros in the two symbol periods are defined to form zero pairs, and bits that can be carried in two symbols are mapped to a zero pair, that is, codebook. Through the foregoing joint modulation, some shaping gains can be obtained, an interval between zero points can be better controlled, and reserved overheads at a starting position and an ending position of the symbols can be reduced. In this embodiment of this application, for one modulated symbol block (which may also be referred to as a data block below), a starting symbol and an ending symbol of the block may be modulated according to FIG. 8. FIG. 8 is a schematic diagram in which zero time points are located at a starting symbol and an ending symbol according to an embodiment of this application. In other words, zero time points may be located at the starting symbol and the ending symbol. This ensures that each data block starts with a zero value and ends with a zero value, and signals between data blocks are smoothly connected. In this embodiment of this application, signals between the data blocks are smoothly connected, so that out-of-band leakage of the signals can be reduced.

The following describes a method for generating a to-be-sent signal based on zero time points obtained through modulation provided in an embodiment of this application.

First, a generation method through sampling is used as an example for description. A time-domain modulated signal may be directly generated according to the following formula:

$$ s(t) = \prod_{k=0}^{M-1} sin\left(\frac{\pi}{MT}(t - kT - \tau_k - \phi)\right), $$

where

M represents a quantity of symbols in a data block, T represents a symbol period, $\tau_k$ represents a zero position of modulation, $\phi$ represents an initial phase, and $\Pi$ represents a multiplication operation.

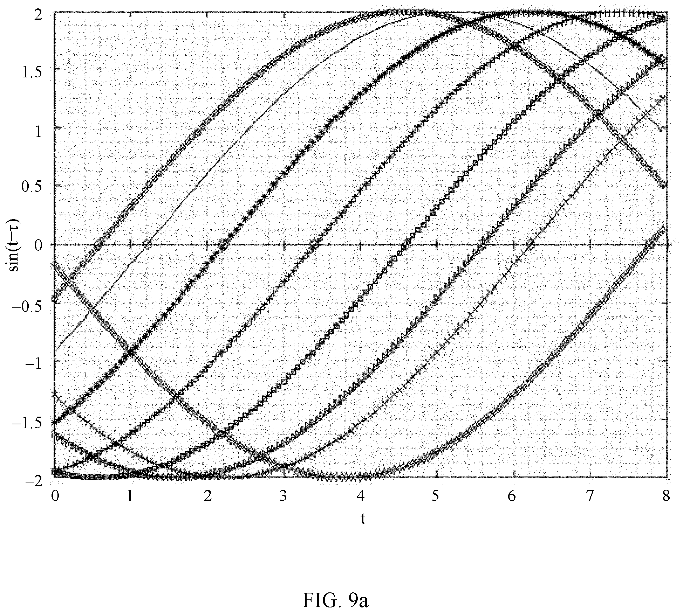

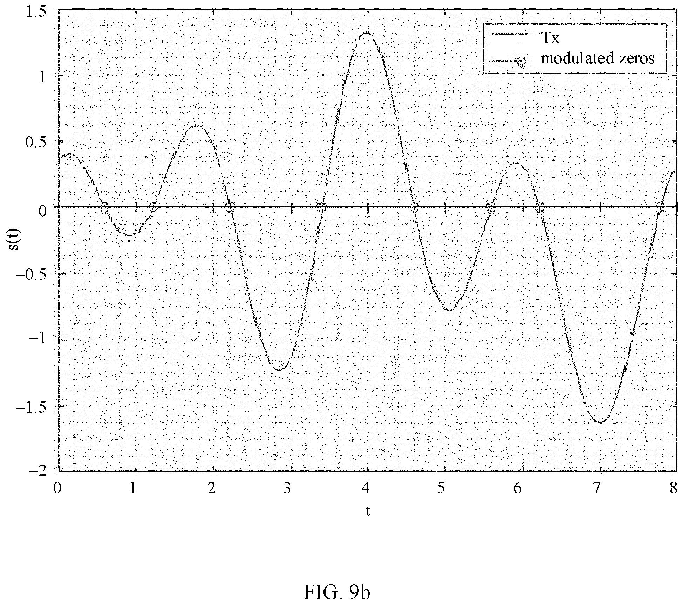

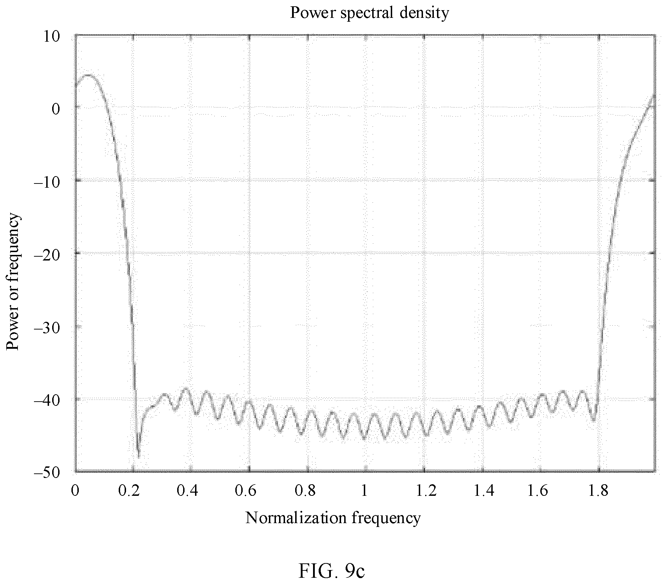

FIG. 9a is a schematic diagram of a basic signal before modulation according to an embodiment of this application. The basic signal (also referred to as a basic signal) is a sine signal of a half period. FIG. 9b is a schematic diagram of a modulated signal according to an embodiment of this application, and shows a modulated signal and corresponding zero positions. FIG. 9c is a schematic diagram of a power spectral density of a modulated signal according to an embodiment of this application. The basic signal is a sine signal of a half period, and there is only one zero point $\tau_k$ in MT. A multiplication operation in the foregoing formula of $s(t)$ does not change a position of the zero point and a quantity of zero points. Therefore, the generated modulated signal meets a bandwidth limitation.

In this embodiment of this application, because the generated modulated signal is a bandwidth-limited signal, values of uniform sampling points with a sampling rate not less than the Nyquist (Nyquist) sampling rate may be calculated. Then, a to-be-sent modulated signal is generated through a digital-to-analog converter according to the following formula or the like, where $T_o <= T$.

$$s(iT_o) = \prod_{k=0}^{M-1} \sin\left(\frac{\pi}{MT}(iT_o - kT - \tau_k - \phi)\right)$$

The following describes a generation method in frequency domain. A to-be-sent signal may also be generated through inverse fast Fourier transform (inverse Fast Fourier Transform, IFFT). First, a discrete Fourier transform (discrete Fourier transform, DFT) coefficient $c_m$ is calculated based on a zero position of modulation, where $\omega_0 = 2\pi/T$. Then, IFFT is performed on $c_m$ to generate a to-be-sent signal. The left and right sides of the following formula are polynomials about $Z$, $c_m$ is the solution that makes the formula always hold true, that is, coefficients of the terms of $Z$ in the polynomials are equal on the left and right sides, and $c_M$ makes a power of a to-be-sent signal meet a requirement, for example, $\sum_{m=-M}^{M} c_m^2 = P$. The formula is as follows:

$$\sum_{m=-M}^{M} c_m Z^m = c_M Z^{-M} \prod_{i=1}^{2M}(Z - e^{j\omega_0 \tau_i})$$

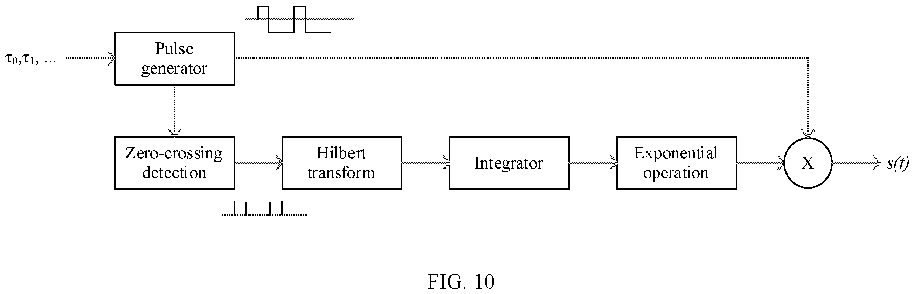

The following describes a generation method in an analog domain. A signal generation process may be considered as a signal reconstruction process of a known zero point. Therefore, a signal reconstruction method may be used in this embodiment of this application. FIG. 10 is a schematic flowchart of generating a modulated signal in an analog domain according to an embodiment of this application. First, a pulse generator generates a pulse signal based on a zero position to be modulated. One channel of pulse signal passes through a zero-crossing detector, and is then subjected to successive processing by a Hilbert (Hilbert) converter, and an integrator, and an exponential operation, so that an output signal is obtained. Then, a multiplication operation is performed on an original pulse of the output signal to obtain a modulated signal.

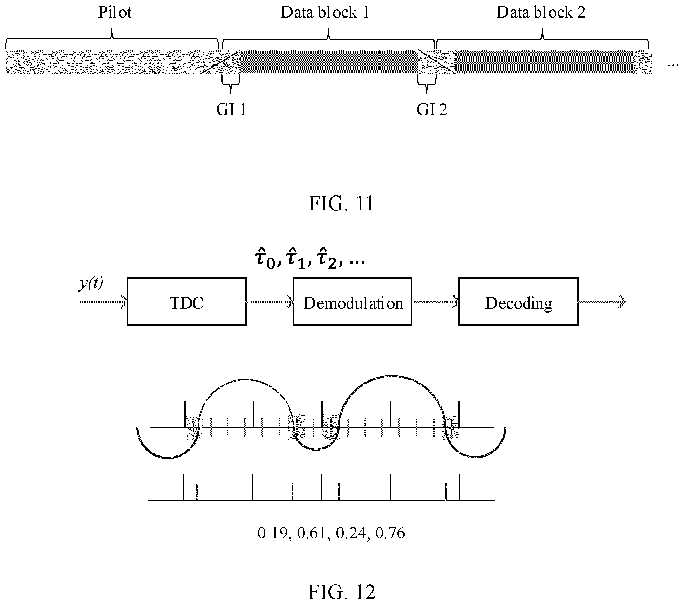

The following describes a frame structure based on time modulation according to an embodiment of this application. In time-based modulation, a signal is generated per data block. Correspondingly, a frame structure is also expressed in a form of data blocks. FIG. 11 is a schematic diagram of a frame structure based on time modulation according to an embodiment of this application. A pilot is inserted before data blocks with modulation information, and is used for synchronization or timing as a reference point for time detection of the data blocks. The pilot may be a sequence of a fixed pattern or a sequence of modulation time, for example, $\tau_0$, $\tau_1$, $\tau_0$, $\tau_1$, $\tau_0$, $\tau_1$, .... The use of the pilot can facilitate detection by a receive end. Because a filter or the like may cause distortion of a starting symbol and an ending symbol of the data block, guard intervals (GIs) may be respectively inserted into a starting position and an ending position of the data block. The GI may be a known symbol or a null guard interval. A smooth filter may further be introduced for a generated data block signal to improve power of an out-of-band signal.

The following describes a receiver based on time modulation provided in an embodiment of this application.

For example, the receiver may be a receiver based on a time-to-digital converter, and the time-to-digital converter is a device for sampling and quantizing a time signal. Because a transmit end modulates a signal at a zero position of the signal, a receiver that uses the time-to-digital converter is a direct and effective receiver. FIG. 12 is a schematic diagram of a receiver-related procedure and a signal receiving result based on a time-to-digital converter according to an embodiment of this application. The time-to-digital converter may directly sample the zero position, namely, time information, of the signal; and perform soft/hard demodulation and subsequent channel decoding on received zero point information according to a modulation scheme. Channel coding may use an RS code suitable for hard demodulation or a polar (Polar) code/low-density parity-check (low-density parity-check code, LDPC) code suitable for soft demodulation.

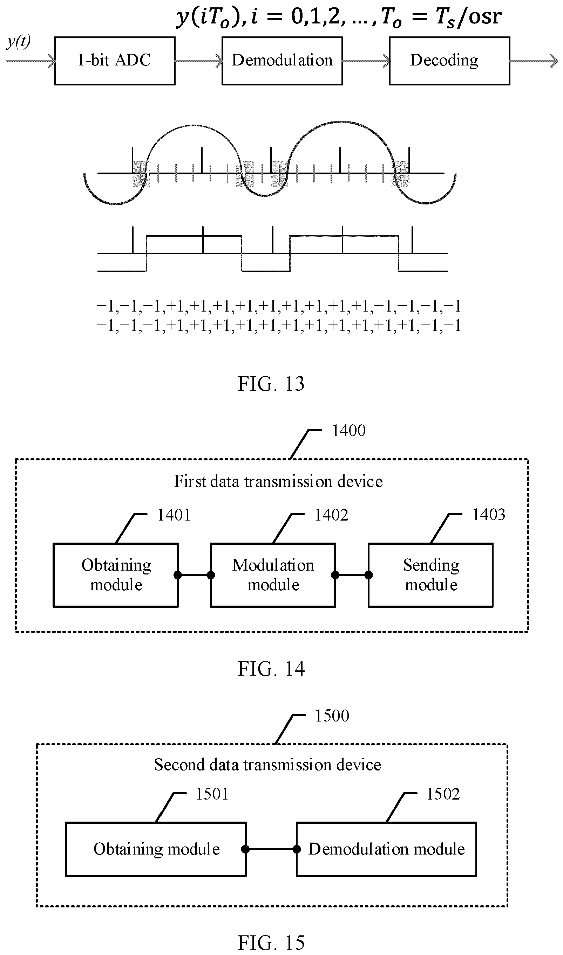

For another example, the receiver may be a receiver that performs oversampling through a 1-bit ADC. Because a signal in each symbol period has only one zero point, that is, a zero position appears in a modulated time, information may alternatively be reflected on a pattern existing after 1-bit quantization is performed on the signal. FIG. 13 is a schematic diagram of a receiver-related procedure and a signal receiving result of oversampling based on a 1-bit ADC according to an embodiment of this application. The receiver may perform oversampling through a 1-bit ADC to obtain pattern information of a signal, and perform pattern decision for demodulation. A sampling rate of the 1-bit ADC is not less than a symbol rate multiplied by a modulation order, to distinguish between different zero positions. A higher oversampling rate indicates more distinguishable time information and better demodulation performance. In the time modulation-based communication solution in this embodiment of this application, information is directly modulated to a zero time of a signal. In addition, an embodiment of this application further provides a modulated symbol design scheme, in which guard intervals are set at a starting position and an ending position of symbols. An embodiment of this application further provides multi-symbol joint modulation. An embodiment of this application further provides a signal generation method, in which a bandwidth-limited signal is generated through half-period sine multiplication. An embodiment of this application further provides a frame structure, a pilot based on time modulation, a method for setting GIs at a starting position and an ending position of a data block, and a filtering method. Finally, an embodiment of this application further provides a method for a receiver, in which a receiver performs oversampling through a time-to-digital converter or a 1-bit ADC.

It can be learned from the foregoing example descriptions that, in this embodiment of this application, information is directly modulated to time, and is effectively received without a high-precision ADC. This embodiment of this application may be used in a communication system requiring 1-bit quantization and oversampling. In this embodiment of this application, a signal bandwidth is determined by a quantity of zero crossing points in a symbol period, so that a bandwidth limiting requirement can be met through the design of a modulated zero position. With more partitions, the zero position in the symbol period can facilitate implementation of higher-order modulation and higher spectral efficiency.

It should be noted that, for brevity, the foregoing method embodiments are described as a series of action combinations. However, a person skilled in the art should understand that this application is not limited to the described order of actions, because according to this application, some steps may be performed in another order or simultaneously. Moreover, a person skilled in the art should also understand that the embodiments described in this specification all are preferred embodiments, and the involved actions and modules are not necessarily required by this application. To better implement the solutions of embodiments of this application, a related apparatus for implementing the solutions is further provided below.

FIG. 14 is a schematic diagram of a composition structure of a first data transmission device according to an embodiment of this application. The first data transmission device includes:

an obtaining module 1401, configured to obtain a data stream, where the data stream includes a plurality of bit groups;
a modulation module 1402, configured to: modulate the data stream into a modulated symbol stream according to a preset modulation rule, and generate a modulated signal based on the modulated symbol stream, where the modulated symbol stream includes a plurality of modulated symbols, and the modulation rule is: determining, in a symbol period of one modulated symbol based on a value of a first bit group, a zero time point corresponding to the first bit group, where the zero time point is a zero crossing point of the modulated signal in the symbol period, the first bit group includes at least one bit, and the first bit group is one of the plurality of bit groups; and
a sending module 1403, configured to send the modulated signal.

In some embodiments of this application, a quantity of bits included in each of the plurality of bit groups is in a one-to-one correspondence with a preset modulation order.

In some embodiments of this application, the modulation module is configured to: determine, according to the modulation rule, a plurality of intervals included in the symbol period; and map the first bit group to a zero time point in one of the plurality of intervals.

In some embodiments of this application, a head of the symbol period includes a reserved first time interval, and/or
a tail of the symbol period includes a reserved second time interval.

In some embodiments of this application, the modulated symbol stream includes a plurality of modulated symbol blocks, where one modulated symbol block includes M modulated symbols, and M is a positive integer;

a zero time point corresponding to the first modulated symbol in the one modulated symbol block is located at a starting position of the one modulated symbol block; and
a zero time point corresponding to the last modulated symbol in the one modulated symbol block is located at an ending position of the one modulated symbol block.

In some embodiments of this application, the modulated symbol stream includes a plurality of modulated symbol blocks, one modulated symbol block includes M modulated symbols, and M is a positive integer; and

a prefix of the one modulated symbol block includes a reserved first guard interval; and/or
a suffix of the one modulated symbol block includes a reserved second guard interval.

In some embodiments of this application, the modulation module is configured to generate the modulated signal based on zero time points corresponding to the plurality of modulated symbols in the modulated symbol stream.

In some embodiments of this application, the modulation module is configured to generate the modulated signal in the following manner:

$$s(iT_o) = \prod_{k=0}^{M-1} \sin\left(\frac{\pi}{MT}(iT_o - kT - \tau_k - \phi)\right),$$

where

$s(iT_o)$ represents a piece of sampling data in the modulated signal, $iT_o$ represents a sampling time point, M represents a quantity of modulated symbols in a modulated symbol block in the modulated symbol stream, T represents a size of a symbol period of a modulated symbol, k represents an index of a $k^{th}$ modulated symbol in a modulated symbol block in the modulated symbol stream, $\tau_k$ represents a zero time point corresponding to a $k^{th}$ modulated symbol in a modulated symbol block in the modulated symbol stream, and $\phi$ represents an initial phase. In embodiments of this application, a data stream is obtained. The data stream includes a plurality of bit groups. The data stream is modulated into a modulated symbol stream according to a preset modulation rule, and a modulated signal is generated based on the modulated symbol stream. The modulated symbol stream includes a plurality of modulated symbols. The modulation rule is: determining, in a symbol period of one modulated symbol based on a value of a first bit group, a zero time point corresponding to the first bit group. The zero time point is a zero crossing point of the modulated signal in the symbol period. The first bit group includes at least one bit, and the first bit group is one of the plurality of bit groups. Then, the modulated signal is sent. In embodiments of this application, a plurality of bit groups in the data stream may be modulated to corresponding zero time points according to the modulation rule. A finally generated modulated signal may carry the zero time points corresponding to the plurality of bit groups. In other words, in embodiments of this application, modulation of the data stream is implemented based on the zero time points, without the need to carry amplitude information in the modulated signal. Therefore, modulation and demodulation based on the zero time points can support high spectral efficiency.

FIG. 15 is a schematic diagram of a composition structure of a second data transmission device according to an embodiment of this application. The second data transmission device includes:

an obtaining module 1501, configured to obtain a modulated signal; and
a demodulation module 1502, configured to: determine a modulated symbol stream based on the modulated signal, and determine a data stream based on the modulated symbol stream and a preset modulation rule. The modulated symbol stream includes a plurality of modulated symbols. The data stream includes a plurality of bit groups.

The modulation rule is: determining a value of a first bit group based on a zero time point of a modulated signal in a symbol period of one modulated symbol. The zero time point is a zero crossing point, in the symbol period, of the modulated signal in the symbol period of the one modulated symbol. The first bit group includes at least one bit, and the first bit group is one of the plurality of bit groups.

In some embodiments of this application, the demodulation module is configured to: oversample the modulated symbol stream by using an analog-to-digital converter ADC, to obtain pattern information in the symbol period; and perform pattern decision on the pattern information in the symbol period to obtain a modulated symbol corresponding to the zero time point.

In some embodiments of this application, the demodulation module is configured to: detect an actual zero time point of the modulated signal; determine a preset zero time point closest to the actual zero time point on a time axis; and determine a modulated symbol corresponding to the preset zero time point closest to the actual zero time point on the time axis.

In some embodiments of this application, a quantity of bits included in each of the plurality of bit groups is in a one-to-one correspondence with a preset modulation order.

In some embodiments of this application, the demodulation module is configured to: determine a plurality of intervals included in the symbol period; and determine a modulated symbol corresponding to a zero time point in each of the plurality of intervals.

In some embodiments of this application, a head of the symbol period includes a reserved first time interval, and/or a tail of the symbol period includes a reserved second time interval.

In some embodiments of this application, the modulated symbol stream includes a plurality of modulated symbol blocks, where one modulated symbol block includes M modulated symbols, and M is a positive integer;

a zero time point corresponding to the first modulated symbol in the one modulated symbol block is located at a starting position of the one modulated symbol block; and
a zero time point corresponding to the last modulated symbol in the one modulated symbol block is located at an ending position of the one modulated symbol block.

In some embodiments of this application, the modulated symbol stream includes a plurality of modulated symbol blocks, one modulated symbol block includes M modulated symbols, and M is a positive integer; and

a prefix of the one modulated symbol block includes a reserved first guard interval; and/or
a suffix of the one modulated symbol block includes a reserved second guard interval.

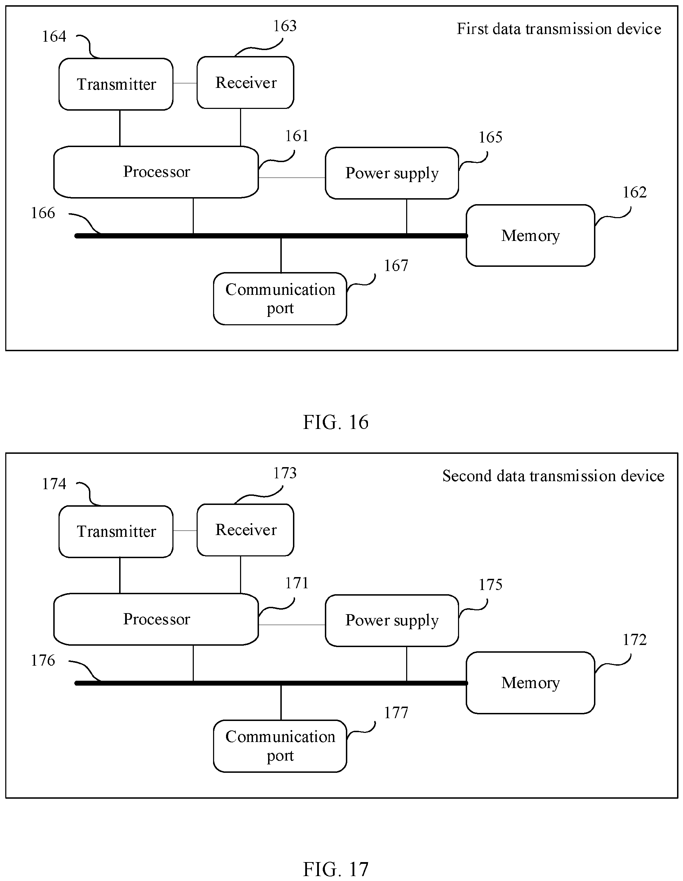

In embodiments of this application, a modulated signal is obtained from a transmit end. A modulated symbol stream is determined based on the modulated signal, and a data stream is determined based on the modulated symbol stream and a preset modulation rule. The modulated symbol stream includes a plurality of modulated symbols. The data stream includes a plurality of bit groups. The modulation rule is: determining a value of a first bit group based on a zero time point of a modulated signal in a symbol period of one modulated symbol. The zero time point is a zero crossing point, in the symbol period, of the modulated signal in the symbol period of the one modulated symbol. The first bit group includes at least one bit, and the first bit group is one of the plurality of bit groups. In embodiments of this application, the obtained modulated signal may carry zero time points corresponding to the plurality of bit groups. In other words, in embodiments of this application, modulation of the data stream is implemented based on the zero time points, and the data stream can be restored without the need to carry amplitude information in the modulated signal. Therefore, modulation and demodulation based on the zero time points can support high spectral efficiency. An embodiment of this application further provides a computer storage medium. The computer storage medium stores a program, and the program is used to perform some or all of the steps described in the foregoing method embodiments. FIG. 16 is a schematic diagram of a structure of a first data transmission device according to an embodiment of this application. The first data transmission device may include a processor 161 (for example, a CPU), a memory 162, a transmitter 164, and a receiver 163. The transmitter 164 and the receiver 163 are coupled to the processor 161, and the processor 161 controls a sending action of the transmitter 164 and a receiving action of the receiver 163. The memory 162 may include a high-speed RAM memory, or may further include a nonvolatile memory NVM, for example, at least one magnetic disk memory. The memory 162 may store various instructions, to implement various processing functions and method steps in embodiments of this application. Optionally, the first data communication device in this embodiment of this application may further include one or more of a power supply 165, a communication bus 166, and a communication port 167. The receiver 163 and the transmitter 164 may be integrated into a transceiver of the first data transmission device, or may be independent receive and transmit antennas of the first data transmission device. The communication bus 166 is configured to implement communication connection between components. The communication port 167 is configured to implement connection and communication between the first data transmission device and another peripheral.

In this embodiment of this application, the memory 162 is configured to store computer-executable program code. The program code includes instructions. When the processor 161 executes the instructions, the instructions enable the processor 161 to perform a processing action of the first data transmission device in the foregoing method embodiment shown in FIG. 2, and enable the transmitter 164 to perform a sending action of the first data transmission device in the foregoing method embodiment. An implementation principle and a technical effect of this embodiment are similar to those of the foregoing method embodiment. Details are not described herein again.

FIG. 17 is a schematic diagram of a structure of a second data transmission device according to an embodiment of this application. The second data transmission device may include a processor (for example, a CPU) 171, a memory 172, a receiver 173, and a transmitter 174. The receiver 173 and the transmitter 174 are coupled to the processor 171, and the processor 171 controls a receiving action of the receiver 173 and a sending action of the transmitter 174. The memory 172 may include a high-speed RAM memory, or may further include a nonvolatile memory NVM, for example, at least one magnetic disk memory. The memory 172 may store various instructions, to implement various processing functions and method steps in embodiments of this application. Optionally, the second data communication device in this embodiment of this application may further include one or more of a power supply 175, a communication bus 176, and a communication port 177. The receiver 173 and the transmitter 174 may be integrated into a transceiver of the second data transmission device, or may be independent receive and transmit antennas of the second data transmission device. The communication bus 176 is configured to implement communication connection between components. The communication port 177 is configured to implement connection and communication between the second data transmission device and another peripheral. In some implementations, the processor 171 and the memory 172 are integrated together. In some other implementations, the processor 171 is coupled to the memory 172 through an interface.

In this embodiment of this application, the memory 172 is configured to store computer-executable program code. The program code includes instructions. When the processor 171 executes the instructions, the instructions enable the processor 171 to perform a processing action of the second data transmission device in the foregoing method embodiment shown in FIG. 2, and enable the transmitter 174 to perform a sending action of the second data transmission device in the foregoing method embodiment. An implementation principle and a technical effect of this embodiment are similar to those of the foregoing method embodiment. Details are not described herein again.

In another possible design, when the first data transmission device or the second data transmission device is a chip in a network device or a terminal device, the first data transmission device includes a logic circuit and a communication interface. The logic circuit may be, for example, a processor. The communication interface may be, for example, an input/output interface, a pin, or a circuit. The logic circuit may execute computer-executable instructions stored in a storage unit, to perform the data transmission method related to a transmit end or a receive end in the foregoing embodiments. Optionally, the storage unit may be a storage unit in the chip, for example, a register or a buffer. Alternatively, the storage unit may be a storage unit in the first data transmission device or the second data transmission device but outside the chip, for example, a read-only memory (read-only memory, ROM), another type of static storage device capable of storing static information and instructions, or a random access memory (random access memory, RAM).

Any processor mentioned above may be a general-purpose central processing unit (CPU), a microprocessor, an application-specific integrated circuit (application-specific integrated circuit, ASIC), or one or more integrated circuits configured to control program execution in the wireless communication method in the first aspect.

In addition, it should be noted that the described apparatus embodiments are merely examples. The units described as separate parts may or may not be physically separate, and components displayed as units may or may not be physical units, and may be located in one place, or may be distributed on a plurality of network units. Some or all of the modules may be selected according to an actual requirement, to achieve the objectives of the solutions of embodiments. In addition, in the accompanying drawings of the apparatus embodiments provided by this application, a connection relationship between modules indicates that the modules have a communication connection, which may be specifically implemented as one or more communication buses or signal cables. A person of ordinary skill in the art may understand and implement embodiments of this application without creative efforts.

Based on the descriptions of the foregoing implementations, a person skilled in the art may clearly understand that this application may be implemented by software and necessary commodity hardware, or by dedicated hardware, including an application-specific integrated circuit, a dedicated CPU, a dedicated memory, a dedicated component, and the like. Usually, any function implemented by a computer program may be easily implemented by using corresponding hardware. In addition, specific hardware structures used to implement a same function may be diverse, for example, an analog circuit, a digital circuit, or a dedicated circuit. However, in this application, implementation through a software program is a better implementation in most cases. Based on such an understanding, the technical solutions in this application essentially or the part contributing to the prior art may be implemented in a form of a software product. The computer software product is stored in a readable storage medium, for example, a floppy disk, a USB flash drive, a removable hard disk, a read-only memory (ROM, Read-Only Memory), a random access memory (RAM, Random Access Memory), a magnetic disk, or an optical disc of a computer, and includes several instructions for instructing a computer device (which may be a personal computer, a server, a network device, or the like) to perform the methods in embodiments of this application.

All or some of the foregoing embodiments may be implemented by software, hardware, firmware, or any combination thereof. When embodiments are implemented by software, all or some of the embodiments may be implemented in a form of a computer program product.

The computer program product includes one or more computer instructions. When the computer program instructions are loaded and executed on the computer, the procedures or functions according to the embodiments of this application are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

**Claims**

1. A data transmission method, wherein the method comprises:

obtaining a data stream, wherein the data stream comprises a plurality of bit groups; modulating the data stream into a modulated symbol stream according to a preset modulation rule, and generating a modulated signal based on the modulated symbol stream, wherein the modulated symbol stream comprises a plurality of modulated symbols, and the modulation rule is: determining, in a symbol period of one modulated symbol based on a value of a first bit group, a zero time point corresponding to the first bit group, wherein the zero time point is a zero crossing point of the modulated signal in the symbol period, the first bit group comprises at least one bit, and the first bit group is one of the plurality of bit groups; and sending the modulated signal.

**2.** The method according to claim 1, wherein a quantity of bits comprised in each of the plurality of bit groups is in a one-to-one correspondence with a preset modulation order.

**3.** The method according to claim 1 or 2, wherein the modulating the data stream into a modulated symbol stream according to a preset modulation rule comprises:

determining, according to the modulation rule, a plurality of intervals comprised in the symbol period; and
mapping the first bit group to a zero time point in one of the plurality of intervals.

**4.** The method according to any one of claims 1 to 3, wherein a head of the symbol period comprises a reserved first time interval, and/or
a tail of the symbol period comprises a reserved second time interval.

**5.** The method according to any one of claims 1 to 4, wherein the modulated symbol stream comprises a plurality of modulated symbol blocks, wherein one modulated symbol block comprises M modulated symbols, and M is a positive integer;

a zero time point corresponding to the first modulated symbol in the one modulated symbol block is located at a starting position of the one modulated symbol block; and
a zero time point corresponding to the last modulated symbol in the one modulated symbol block is located at an ending position of the one modulated symbol block.

**6.** The method according to any one of claims 1 to 5, wherein the modulated symbol stream comprises a plurality of modulated symbol blocks, one modulated symbol block comprises M modulated symbols, and M is a positive integer; and

a prefix of the one modulated symbol block comprises a reserved first guard interval, and/or
a suffix of the one modulated symbol block comprises a reserved second guard interval.

**7.** The method according to any one of claims 1 to 6, wherein the generating a modulated signal based on the modulated symbol stream comprises:
generating the modulated signal based on zero time points corresponding to the plurality of modulated symbols in the modulated symbol stream.

**8.** The method according to claim 7, wherein the generating the modulated signal based on zero time points corresponding to the plurality of modulated symbols in the modulated symbol stream comprises:

generating the modulated signal in the following manner:

$$s(iT_o) = \prod_{k=0}^{M-1} \sin\left(\frac{\pi}{MT}(iT_o - kT - \tau_k - \phi)\right),$$

wherein
$s(iT_o)$ represents a piece of sampling data in the modulated signal, $iT_o$ represents a sampling time point, M represents a quantity of modulated symbols in a modulated symbol block in the modulated symbol stream, T represents a size of a symbol period of a modulated symbol, k represents an index of a $k^{th}$ modulated symbol in a modulated symbol block in the modulated symbol stream, $\tau_k$ represents a zero time point corresponding to a $k^{th}$ modulated symbol in a modulated symbol block in the modulated symbol stream, and $\phi$ represents an initial phase.

**9.** A data transmission method, wherein the method comprises:

obtaining a modulated signal; and
determining a modulated symbol stream based on the modulated signal, and determining a data stream based on the modulated symbol stream and a preset modulation rule, wherein the modulated symbol stream comprises a plurality of modulated symbols, the data stream comprises a plurality of bit groups, and the modulation rule is: determining a value of a first bit group based on a zero time point of a modulated signal in a symbol period of one modulated symbol, wherein the zero time point is a zero crossing point, in the symbol period, of the modulated signal in the symbol period of the one modulated symbol, the first bit group comprises at least one bit, and the first bit group is one of the plurality of bit groups.

**10.** The method according to claim 9, wherein the determining a modulated symbol stream based on the modulated signal comprises:

oversampling the modulated signal by using an analog-to-digital converter ADC, to obtain pattern information in the symbol period; and
performing pattern decision on the pattern information in the symbol period to obtain a modulated symbol corresponding to the zero time point.

**11.** The method according to claim 9, wherein the determining a modulated symbol stream based on the modulated signal comprises:

detecting an actual zero time point of the modulated signal;
determining a preset zero time point closest to the actual zero time point on a time axis; and
determining a modulated symbol corresponding to the preset zero time point closest to the actual zero time point on the time axis.

12. The method according to any one of claims 9 to 11, wherein a quantity of bits comprised in each of the plurality of bit groups is in a one-to-one correspondence with a preset modulation order.

13. The method according to any one of claims 9 to 12, wherein the determining a modulated symbol stream based on the modulated signal comprises:

determining a plurality of intervals comprised in the symbol period; and
determining a modulated symbol corresponding to a zero time point in each of the plurality of intervals.

14. The method according to any one of claims 9 to 13, wherein a head of the symbol period comprises a reserved first time interval, and/or
a tail of the symbol period comprises a reserved second time interval.

15. The method according to any one of claims 9 to 14, wherein the modulated symbol stream comprises a plurality of modulated symbol blocks, wherein one modulated symbol block comprises M modulated symbols, and M is a positive integer;

a zero time point corresponding to the first modulated symbol in the one modulated symbol block is located at a starting position of the one modulated symbol block; and
a zero time point corresponding to the last modulated symbol in the one modulated symbol block is located at an ending position of the one modulated symbol block.

16. The method according to any one of claims 9 to 15, wherein the modulated symbol stream comprises a plurality of modulated symbol blocks, one modulated symbol block comprises M modulated symbols, and M is a positive integer; and

a prefix of the one modulated symbol block comprises a reserved first guard interval, and/or
a suffix of the one modulated symbol block comprises a reserved second guard interval.

17. A data transmission device, wherein the device comprises:

an obtaining module, configured to obtain a data stream, wherein the data stream comprises a plurality of bit groups;
a modulation module, configured to: modulate the data stream into a modulated symbol stream according to a preset modulation rule, and generate a modulated signal based on the modulated symbol stream, wherein the modulated symbol stream comprises a plurality of modulated symbols, and the modulation rule is: determining, in a symbol period of one modulated symbol based on a value of a first bit group, a zero time point corresponding to the first bit group, wherein the zero time point is a zero crossing point of the modulated signal in the symbol period, the first bit group comprises at least one bit, and the first bit group is one of the plurality of bit groups; and
a sending module, configured to send the modulated signal.

18. The device according to claim 17, wherein a quantity of bits comprised in each of the plurality of bit groups is in a one-to-one correspondence with a preset modulation order.

19. The device according to claim 17 or 18, wherein the modulation module is configured to: determine, according to the modulation rule, a plurality of intervals comprised in the symbol period; and map the first bit group to a zero time point in one of the plurality of intervals.

20. The device according to any one of claims 17 to 19, wherein a head of the symbol period comprises a reserved first time interval, and/or
a tail of the symbol period comprises a reserved second time interval.

21. The device according to any one of claims 17 to 20, wherein the modulated symbol stream comprises a plurality of modulated symbol blocks, wherein one modulated symbol block comprises M modulated symbols, and M is a positive integer;

a zero time point corresponding to the first modulated symbol in the one modulated symbol block is located at a starting position of the one modulated symbol block; and
a zero time point corresponding to the last modulated symbol in the one modulated symbol block is located at an ending position of the one modulated symbol block.

22. The device according to any one of claims 17 to 21, wherein the modulated symbol stream comprises a plurality of modulated symbol blocks, one modulated symbol block comprises M modulated symbols, and M is a positive integer; and

a prefix of the one modulated symbol block comprises a reserved first guard interval, and/or a suffix of the one modulated symbol block comprises a reserved second guard interval.

23. The device according to any one of claims 17 to 22, wherein the modulation module is configured to generate the modulated signal based on zero time points corresponding to the plurality of modulated symbols in the modulated symbol stream.

24. The device according to claim 23, wherein the modulation module is configured to generate the modulated signal in the following manner:

$$s(iT_o) = \prod_{k=0}^{M-1} \sin\left(\frac{\pi}{MT}\left(iT_o - kT - \tau_k - \phi\right)\right),$$

wherein
$s(iT_o)$ represents a piece of sampling data in the modulated signal, $iT_o$ represents a sampling time point, M represents a quantity of modulated symbols in a modulated symbol block in the modulated symbol stream, T represents a size of a symbol period of a modulated symbol, k represents an index of a $k^{th}$ modulated symbol in a modulated symbol block in the modulated symbol stream, $\tau_k$ represents a zero time point corresponding to a $k^{th}$ modulated symbol in a modulated symbol block in the modulated symbol stream, and $\phi$ represents an initial phase.

25. A data transmission device, wherein the device comprises:

an obtaining module, configured to obtain a modulated signal;
a demodulation module, configured to: determine a modulated symbol stream based on the modulated signal, and determine a data stream based on the modulated symbol stream and a preset modulation rule, wherein the modulated symbol stream comprises a plurality of modulated symbols, the data stream comprises a plurality of bit groups, and the modulation rule is: determining a value of a first bit group based on a zero time point of a modulated signal in a symbol period of one modulated symbol, wherein the zero time point is a zero crossing point, in the symbol period, of the modulated signal in the symbol period of the one modulated symbol, the first bit group comprises at least one bit, and the first bit group is one of the plurality of bit groups.

26. The device according to claim 25, wherein the demodulation module is configured to: oversample the modulated symbol stream by using an analog-to-digital converter ADC, to obtain pattern information in the symbol period; and perform pattern decision on the pattern information in the symbol period to obtain a modulated symbol corresponding to the zero time point.

27. The device according to claim 25, wherein the demodulation module is configured to: detect an actual zero time point of the modulated signal; determine a preset zero time point closest to the actual zero time point on a time axis; and determine a modulated symbol corresponding to the preset zero time point closest to the actual zero time point on the time axis.

28. The device according to any one of claims 25 to 27, wherein a quantity of bits comprised in each of the plurality of bit groups is in a one-to-one correspondence with a preset modulation order.

29. The device according to any one of claims 25 to 28, wherein the demodulation module is configured to: determine a plurality of intervals comprised in the symbol period; and determine a modulated symbol corresponding to a zero time point in each of the plurality of intervals.

30. The device according to any one of claims 25 to 29, wherein a head of the symbol period comprises a reserved first time interval, and/or a tail of the symbol period comprises a reserved second time interval.

31. The device according to any one of claims 25 to 30, wherein the modulated symbol stream comprises a plurality of modulated symbol blocks, wherein one modulated symbol block comprises M modulated symbols, and M is a positive integer;

a zero time point corresponding to the first modulated symbol in the one modulated symbol block is located at a starting position of the one modulated symbol block; and
a zero time point corresponding to the last modulated symbol in the one modulated symbol block is located at an ending position of the one modulated symbol block.

32. The device according to any one of claims 25 to 31, wherein the modulated symbol stream comprises a plurality of modulated symbol blocks, one modulated symbol block comprises M modulated symbols, and M is a positive integer; and

a prefix of the one modulated symbol block comprises a reserved first guard interval, and/or

a suffix of the one modulated symbol block comprises a reserved second guard interval.

33. A computer-readable storage medium, comprising computer instructions, wherein when the computer instructions are run on a computer, the computer is enabled to perform the method according to any one of claims 1 to 8 or the method according to any one of claims 9 to 16.

34. A computer program product comprising instructions, wherein when the computer program product runs on a computer, the computer is enabled to perform the method according to any one of claims 1 to 8 or the method according to any one of claims 9 to 16.

35. A data transmission device, wherein the data transmission device comprises a processor and a memory;

the memory is configured to store a computer program; and
the processor is configured to: invoke and run the computer program stored in the memory, so that the data transmission device performs the method according to any one of claims 1 to 8 or the method according to any one of claims 9 to 16.

36. A data transmission system, wherein the data transmission system comprises a first data transmission device and a second data transmission device, wherein

the first data transmission device is the data transmission device according to any one of claims 17 to 24; and
the second data transmission device is the data transmission device according to any one of claims 25 to 32.

FIG. 1

First data
transmission device

Second data
transmission device

201: Obtain a data stream, where the data
stream includes a plurality of bit groups

202: Modulate the data stream into a
modulated symbol stream according to a
preset modulation rule, and generate a
modulated signal based on the modulated
symbol stream

203: Send the modulated signal ⟶

211: Obtain the modulated signal

212: Determine the modulated symbol
stream based on the modulated signal,
and determine the data stream based on
the modulated symbol stream and the
preset modulation rule

FIG. 2

EP 4 239 963 A1

$a_0, a_1, \ldots$      $b_0, b_1, \ldots$      $\tau_0, \tau_1, \ldots$      $s(t)$    $n(t)$    $y(t)$      $\hat{\tau}_0, \hat{\tau}_1, \ldots$      $\hat{b}_0, \hat{b}_1, \ldots$      $\hat{a}_0, \hat{a}_1, \ldots$

| Channel encoding | → | Mapping | → | Signal generation | → (+) → | Time detection | → | Demodulation | → | Channel decoding |

FIG. 3

$b_i b_{i+1}$         $b_{i+2} b_{i+3}$         $b_{i+4} b_{i+5}$         $b_{i+6} b_{i+7}$

01            10            00            11

$\tau_k = 3T/8$     $\tau_{k+1} = 5T/8$     $\tau_{k+2} = T/8$     $\tau_{k+3} = 7T/8$

FIG. 4a

$T$

00            10            00            11

$\hat{b}_i \hat{b}_{i+1}$        $\hat{b}_{i+2} \hat{b}_{i+3}$        $\hat{b}_{i+4} \hat{b}_{i+5}$        $\hat{b}_{i+6} \hat{b}_{i+7}$

FIG. 4b

RS code rate 223/255

FIG. 5

| $b_i$ | $\tau$ |
|---|---|
| 0 | $\tau_0$ |
| 1 | $\tau_1$ |

FIG. 6a

| $b_i b_{i+1}$ | $\tau$ |
|---|---|
| 00 | $\tau_0$ |
| 01 | $\tau_1$ |
| 10 | $\tau_2$ |
| 11 | $\tau_3$ |

FIG. 6b

| $b_i b_{i+1} b_{i+2}$ | $\tau$ |
|---|---|
| 000 | $\tau_0$ |
| 001 | $\tau_1$ |
| 010 | $\tau_2$ |
| 011 | $\tau_3$ |
| 100 | $\tau_4$ |
| 101 | $\tau_5$ |
| 110 | $\tau_6$ |
| 111 | $\tau_7$ |

FIG. 6c

| Codebook | |
|---|---|
| $b_i b_{i+1} b_{i+2} b_{i+3}$ | $(\tau_0, \tau_1)$ |

FIG. 7

FIG. 8

FIG. 9a

FIG. 9b

Power spectral density

FIG. 9c

$\tau_0, \tau_1, \ldots$ → Pulse generator

Zero-crossing detection → Hilbert transform → Integrator → Exponential operation → X → $s(t)$

FIG. 10

Pilot       Data block 1       Data block 2

GI 1       GI 2

FIG. 11

$\hat{\tau}_0, \hat{\tau}_1, \hat{\tau}_2, \dots$

$y(t)$ → TDC → Demodulation → Decoding →

0.19, 0.61, 0.24, 0.76

FIG. 12

$$y(iT_o), i = 0,1,2, \dots, T_o = T_s/\text{osr}$$

*y(t)* →  1-bit ADC  →  Demodulation  →  Decoding  →

−1,−1,−1,+1,+1,+1,+1,+1,+1,+1,+1,+1,−1,−1,−1,−1
−1,−1,−1,+1,+1,+1,+1,+1,+1,+1,+1,+1,+1,+1,−1,−1

FIG. 13

1400

First data transmission device

1401
Obtaining module

1402
Modulation module

1403
Sending module

FIG. 14

1500

Second data transmission device

1501
Obtaining module

1502
Demodulation module

FIG. 15

FIG. 16

FIG. 17

## INTERNATIONAL SEARCH REPORT

| | International application No. |
|---|---|
| | **PCT/CN2021/127855** |

**A. CLASSIFICATION OF SUBJECT MATTER**

H04L 27/36(2006.01)i

According to International Patent Classification (IPC) or to both national classification and IPC

**B. FIELDS SEARCHED**

Minimum documentation searched (classification system followed by classification symbols)

H04L; H04B; H04W

Documentation searched other than minimum documentation to the extent that such documents are included in the fields searched

Electronic data base consulted during the international search (name of data base and, where practicable, search terms used)

CNTXT, CNKI, VEN, ENTXT, IEEE, 3GPP: 调制, 解调, 零点, 过零, 时刻, 时间, 比特, 符号, 周期, modulate, modulation, demodulate, zero, time, bit, symbol, period

**C. DOCUMENTS CONSIDERED TO BE RELEVANT**

| Category* | Citation of document, with indication, where appropriate, of the relevant passages | Relevant to claim No. |
|---|---|---|
| A | US 2019238379 A1 (CALIFORNIA INSTITUTE OF TECHNOLOGY et al.) 01 August 2019 (2019-08-01)<br>entire document | 1-36 |
| A | US 2020259534 A1 (CALIFORNIA INST OF TECHNOLOGY et al.) 13 August 2020 (2020-08-13)<br>entire document | 1-36 |
| A | CN 110289922 A (NANJING UNIVERSITY OF AERONAUTICS AND ASTRONAUTICS) 27 September 2019 (2019-09-27)<br>entire document | 1-36 |
| A | CN 111684771 A (INTEL CORPORATION) 18 September 2020 (2020-09-18)<br>entire document | 1-36 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 December 2021** | **19 January 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

| International application No. |
| --- |
| **PCT/CN2021/127855** |

| Patent document cited in search report | | | Publication date (day/month/year) | Patent family member(s) | | | Publication date (day/month/year) |
| --- | --- | --- | --- | --- | --- | --- | --- |
| US | 2019238379 | A1 | 01 August 2019 | WO | 2019148139 | A1 | 01 August 2019 |
| | | | | SG | 11202006861 X | A | 28 August 2020 |
| | | | | CN | 112042161 | A | 04 December 2020 |
| | | | | US | 2020403837 | A1 | 24 December 2020 |
| | | | | US | 10992507 | B2 | 27 April 2021 |
| | | | | EP | 3744057 | A1 | 02 December 2020 |
| | | | | EP | 3744057 | A4 | 06 October 2021 |
| | | | | US | 10797926 | B2 | 06 October 2020 |
| US | 2020259534 | A1 | 13 August 2020 | EP | 3921986 | A1 | 15 December 2021 |
| | | | | US | 2020403664 | A1 | 24 December 2020 |
| | | | | US | 10992353 | B2 | 27 April 2021 |
| | | | | SG | 11202108549 Y | A | 29 September 2021 |
| | | | | WO | 2020163759 | A1 | 13 August 2020 |
| | | | | KR | 20210139244 | A | 22 November 2021 |
| | | | | US | 10804982 | B2 | 13 October 2020 |
| CN | 110289922 | A | 27 September 2019 | None | | | |
| CN | 111684771 | A | 18 September 2020 | KR | 20200045507 | A | 04 May 2020 |
| | | | | WO | 2019055894 | A1 | 21 March 2019 |
| | | | | US | 2020212943 | A1 | 02 July 2020 |
| | | | | DE | 112018005256 | T5 | 02 July 2020 |
| | | | | JP | 2020534723 | A | 26 November 2020 |
| | | | | EP | 3685555 | A1 | 29 July 2020 |
| | | | | EP | 3685555 | A4 | 23 June 2021 |

Form PCT/ISA/210 (patent family annex) (January 2015)

**REFERENCES CITED IN THE DESCRIPTION**

**Patent documents cited in the description**

- CN 202011346394